(19) Europäisches Patentamt / European Patent Office / Office européen des brevets

(11) **EP 2 416 213 A1**

(12) **EUROPEAN PATENT APPLICATION**
published in accordance with Art. 153(4) EPC

(43) Date of publication:
**08.02.2012 Bulletin 2012/06**

(51) Int Cl.:
*G02F 1/1343* (2006.01)   *G02F 1/1337* (2006.01)
*G02F 1/1368* (2006.01)

(21) Application number: **10758296.7**

(22) Date of filing: **01.04.2010**

(86) International application number:
**PCT/JP2010/002404**

(87) International publication number:
**WO 2010/113517 (07.10.2010 Gazette 2010/40)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **03.04.2009   JP 2009091130**

(71) Applicant: **Sharp Kabushiki Kaisha**
**Osaka-shi, Osaka 545-8522 (JP)**

(72) Inventors:
• **SHIMOSHIKIRYOH, Fumikazu**
**Abeno-ku, Osaka-shi**
**Osaka 545-8522 (JP)**
• **SHOHRAKU, Akihiro**
**Abeno-ku, Osaka-shi**
**Osaka 545-8522 (JP)**

• **YAMASHITA, Yuki**
**Abeno-ku, Osaka-shi**
**Osaka 545-8522 (JP)**
• **SUGISAKA, Akane**
**Abeno-ku, Osaka-shi**
**Osaka 545-8522 (JP)**
• **YOSHIDA,Masahiro**
**Abeno-ku, Osaka-shi**
**Osaka 545-8522 (JP)**
• **SASAKI, Takahiro**
**Abeno-ku, Osaka-shi**
**Osaka 545-8522 (JP)**

(74) Representative: **Müller - Hoffmann & Partner**
**Innere Wiener Straße 17**
**81667 München (DE)**

(54) **LIQUID CRYSTAL DISPLAY DEVICE**

(57)    The MVA liquid crystal display device of the present invention includes a first domain regulating structure formed in a first substrate and a second domain regulating structure formed in a second substrate. The first domain regulating structure includes a first linear component extending in a first direction and a second linear component extending in a second direction different from the first direction by about 90°. The second domain regulating structure includes a third linear component extending in the first direction, and a fourth linear component extending in the second direction. When a voltage is applied across a liquid crystal layer, four domains in which the tilt directions of liquid crystal molecules are mutually different by about 90° are formed. An arbitrary pixel includes at least one first electrode formed in the first substrate and a second electrode formed in the second substrate. Each of the at least one first electrode has a continuous opening pattern, and the first and second linear components of the first domain regulating structure are included in any of the continuous opening patterns included respectively in the at least one of first electrode. According to the MVA liquid crystal display device of the present invention, restoration can easily be performed.

EP 2 416 213 A1

*FIG.6*

**Description**

## TECHNICAL FIELD

The present invention relates to a liquid crystal display device, and more particularly to an MVA liquid crystal display device.

## BACKGROUND ART

MVA (Multidomain Vertical Alignment) liquid crystal display devices have wider viewing angle performance than TN liquid crystal display devices, so that MVA liquid crystal display devices are widely used as liquid crystal display devices for TV and other applications (see Patent Documents 1 and 2, for example).

In the MVA liquid crystal display device, on the sides facing a vertical alignment liquid crystal layer of a pair of substrates which are opposed with the liquid crystal layer interposed therebetween, domain regulating structures (also referred to as orientation regulating structures) are disposed, so as to form a plurality of liquid crystal domains having different orientations (tilt directions) of directors. As the domain regulating structure, an opening portion (a slit) provided in an electrode, or a dielectric protrusion (a rib) formed on the side facing the liquid crystal layer of the electrode is used.

Typically, the pair of substrates are respectively provided with linear domain regulating structures extending in two directions which are mutually orthogonal. When they are viewed from a direction perpendicular to the substrates, the domain regulating structure formed on one substrate and the domain regulating structure formed on the other substrate are arranged in parallel and alternately. As a result, when a voltage is applied across a liquid crystal layer of an arbitrary pixel, four domains in which liquid crystal molecules which are tilted in directions mutually different by about 90° (also referred to as director directions of liquid crystal domains) are formed between the linear domain regulating means. Typically, four liquid crystal domains with their director azimuth angles of 45° with respect to polarization axes (transmission axes) of a pair of polarization plates disposed in a crossed-Nichole manner are formed. When 0° of azimuth angle is assumed as a direction of polarization axis of one polarization plate (e.g. a horizontal direction of a display plane), and the anticlockwise direction is assumed to be a positive direction, the azimuth angles of the directors of the four liquid crystal domains are 45°, 135°, 225°, and 315°.

The term "pixel" in the present specification indicates the minimum unit of the display performed by a liquid crystal display device. In the case of color display, the term "pixel" indicates the minimum unit for displaying each primary color (typically R, G, or B), and is sometimes referred to as "dot."

In recent years, in order to improve the dependence on viewing angle of γ characteristic of MVA liquid crystal display device, in Patent Document 3, the applicant of the present invention discloses a liquid crystal display device and a driving method in which one pixel is divided into a plurality of sub-pixels having different degrees of brightness, thereby improving the dependence on viewing angle of the γ characteristic. Especially, it is possible to improve the dependence on viewing angle of the γ characteristic in which display luminance of lower gradation sequence is higher (whitish) than a predetermined luminance. In the present specification, such display or driving may sometimes be referred to as area-grayscale display, area-grayscale driving, multi-pixel display, multi-pixel driving, or the like.

Patent Document 3 discloses a liquid crystal display device in which a storage capacitor is provided for a plurality of sub-pixels in one pixel, storage capacitor counter electrode for constituting the storage capacitor (connected to a CS bus line) is electrically independent for each sub-pixel, and a voltage supplied to the storage capacitor counter electrode (referred to as a storage capacitor counter voltage) is varied, thereby varying effective voltages to be applied across liquid crystal layers of the plurality of sub-pixels by utilizing capacitance split. In applications requiring wide viewing angle performance such as for TV, the MVA liquid crystal display device adopts multi-pixel display by way of various methods.

The entire disclosures of Patent Documents Nos. 1 to 3 are hereby incorporated by reference.

## CITATION LIST

### PATENT LITERATURE

Patent Document 1: Japanese Laid-Open Patent Publication No. 11-242225 (U.S. Patent No. 6724452)
Patent Document 2: Japanese Laid-Open Patent Publication No. 2000-155317 (U.S. patent No. 6879364)
Patent Document 3: Japanese Laid-Open patent Publication No. 2004-62146 (U.S. patent No. 6958791)

## SUMMARY OF INVENTION

### TECHNICAL PROBLEM

As liquid crystal displays are widely spread, lower prices of liquid crystal display devices are increasingly required. Therefore, it is necessary to improve the yield of production of MVA display devices. For example, if any electrically conductive foreign material is mixed between a first electrode (e.g. a pixel electrode) and a second electrode (e.g. a counter electrode) which are opposed with a liquid crystal layer interposed therebetween, and the first electrode and the second electrode are electrically shortcircuited, a voltage is not applied across the liquid crystal layer of the pixel. This causes a pixel defect.

The present invention has been conducted so as to improve the yield of production of MVA liquid crystal display devices, and the objective of the present invention is to provide an MVA liquid crystal display device having a configuration which can easily be restored.

## SOLUTION TO PROBLEM

The MVA liquid crystal display device of the present invention is a liquid crystal display device including: a first substrate; a second substrate; a vertical-alignment type liquid crystal layer disposed between the first substrate and the second substrate; a first domain regulating structure formed in the first substrate; and a second domain regulating structure formed in the second substrate, the first domain regulating structure having a first linear component extending in a first direction and a second liner component extending in a second direction different from the first direction by about 90°, the second domain regulating structure having a third linear component extending in the first direction and a fourth linear component extending in the second direction, the number of at least one of the first and second linear components or the third and fourth linear components being plural, when viewed from a normal direction to the first substrate, the first linear component and the third linear component being alternately arranged, the second linear component and the fourth linear component being alternately arranged, and when a voltage is applied across the liquid crystal layer of an arbitrary pixel, four domains of which tilting directions of liquid crystal molecules are mutually different by about 90° being formed between the first linear component and the third linear component and between the second linear component and the fourth linear component, wherein the arbitrary pixel includes at least one first electrode formed in the first substrate and a second electrode formed in the second substrate, each of the at least one first electrode has a continuous opening pattern, and the first and second linear components of the first domain regulating structure are included in any of the continuous opening patterns included respectively in the at least one first electrode.

Herein, the first electrode is defined by an outer edge of a conductive layer for constituting the electrode, but does not have any relation to the electric potential. For example, when viewed from the side of the liquid crystal layer, if outer edges of two conductive layers (e.g. ITO layers) are mutually independent, the two conductive layers constitute two first electrodes even in the case where substantially the same voltage is supplied to the conductive layers via a drain of one TFT. It is understood that the number of TFTs connected to the conductive layers has no relation to the number of first electrodes.

In the case where an arbitrary pixel has only one first electrode, the first and second linear components of the first domain regulating structure are included in the continuous opening pattern of the only one first electrode. Alternatively, in the case where an arbitrary pixel has a plurality of first electrodes, the first and second linear components of the first domain regulating structure are included in any of the respective continuous opening patterns of the plurality of first electrodes. In other words, the first domain regulating structure is the opening portion formed in the first electrode, and the first and second linear components of the first domain regulating structure do not exist independently in the only one first electrode or in each of the plurality of first electrodes. The first linear components, the second linear components, or the first linear component and the second linear component are coupled, and they are included in the continuous opening pattern of the only one first electrode or each of the plurality of first electrode. Each of the at least one electrode includes only one continuous opening pattern. Typically, each of the at least one first electrode has a plurality of first linear components, a plurality of second linear components, or a pair of a first linear component and a second linear component.

In one embodiment, the at least one first electrode includes a first type of first electrode in which the continuous opening pattern includes a V-shaped opening portion including both of the first and the second linear components. Specifically, herein the first electrode including the V-shaped opening portion is assumed as the first type of first electrode. When the pixel has a rectangular shape having a longer side in the columnar direction, in the first type of first electrode, the V-shaped opening portion may be disposed with the axis parallel to the longer side as an axis of symmetry, or may be disposed with the axis parallel to the shorter side as an axis of symmetry.

In one embodiment, the continuous opening pattern of the first type of first electrode includes a plurality of both of the first and the second linear components, and includes a plurality of V-shaped opening portions.

In one embodiment, the continuous opening pattern of the first type of first electrode further includes a linear opening portion extending in a direction by which an interior angle of the V-shaped opening portion is divided into two equal parts.

In one embodiment, the first type of first electrode has a longer side and a shorter side, and the linear opening portion is parallel to the longer side.

In one embodiment, the linear opening portion is coupled to the center of the plurality of V-shaped opening portions.

In one embodiment, the at least one first electrode further includes a plurality of minute opening portions parallel to a direction substantially orthogonal to the first linear component or the second linear component. The minute opening portion has a width smaller than the width of the first linear component or the second linear component. For example, the first linear component and the second linear component mutually have the same width. When the width is 7 μm to 17 μ m, the width of the minute opening portion is 2 μm to 4 μm.

In one embodiment, the plurality of minute opening portions are formed in the vicinity of the center of the V-shaped opening portion. The minute opening portion with such a configuration acts so as to stabilize the orientation of liquid crystal molecules in the vicinity of the center of the V-shaped opening portion.

In one embodiment, the plurality of minute opening portions are formed in the vicinity of an edge of the at least one first electrode. The minute opening portion with such a configuration acts so as to stabilize the orientation of liquid crystal molecules in the vicinity of the edge of the at least one first electrode.

In one embodiment, the plurality of minute opening portions are included in the continuous opening pattern. The minute opening portion is not necessarily included in the continuous opening pattern, but alternatively may be coupled to the continuous opening pattern.

In one embodiment, the at least one first electrode includes a plurality of first electrodes, and the plurality of first electrodes include a second type of first electrode in which the continuous opening pattern includes only either one of the first linear component or the second linear component, and a third type of first electrode in which the continuous opening pattern includes only the other one of the first linear component or the second linear component. Specifically, an arbitrary pixel includes both of the first linear component and the second linear component. However, in the case where the arbitrary pixel includes a plurality of first electrodes, each of the plurality of first electrodes may include either of the first linear components or the second linear components.

In one embodiment, the continuous opening pattern of the second type of first electrode includes a plurality of the first linear components or the second linear components, and the plurality of first linear components or the plurality of second linear components are coupled by a linear coupling opening portion extending in a direction different from the first direction by about 90° or by a linear coupling opening portion extending in a direction different from the second direction by about 90°.

In one embodiment, the plurality of first electrodes includes two first electrodes arranged symmetrically with respect to a gate bus line or a CS bus line, and the continuous opening patterns of the two first electrodes have a line symmetric relationship with the gate bus line or the CS bus line as an axis of symmetry.

In one embodiment, both of the two first electrodes are first type of first electrodes in each of which the continuous opening pattern includes both of the first and the second linear components, and the V-shaped opening portion is disposed in such a manner that the upper side of the V shape is directed to the gate bus line or the CS bus line.

In one embodiment, the continuous opening pattern included in each of the at least one first electrode does not cross the edge of the at least one first electrode.

In one embodiment, when viewed from a normal direction to the first substrate, a respective edge of the at least one first electrode partially overlaps a source bus line. For example, the source bus line has a ladder structure including two parallel main lines and a plurality of branch lines for mutually connecting the two parallel main lines.

In one embodiment, the second domain regulating structure is included in the opening pattern formed in the second electrode or the dielectric projecting pattern formed on the side of the liquid crystal layer of the second electrode.

In one embodiment, in the at least one first electrode, the continuous opening pattern includes a V-shaped opening portion including both of the first and the second linear components, and when viewed from a normal direction to the first substrate, the opening pattern or the dielectric projecting pattern of the second electrode further includes a linear opening portion or a linear dielectric protrusion extending in a direction for dividing an interior angle of the V-shaped opening portion into two equal parts.

In one embodiment, when viewed from the normal direction to the first substrate, the at least one first electrode is in parallel with the linear opening portion or the linear dielectric protrusion of the second electrode extending in the direction for dividing the interior angle of the V-shaped opening portion into two equal parts, and does not have an opening portion which overlaps the linear opening portion or the linear dielectric protrusion of the second electrode.

## ADVANTAGEOUS EFFECTS OF INVENTION

In the MVA liquid crystal display device of the present invention, each of the first electrodes has a continuous opening portion, so that it is possible to obtain a larger number of separated portions than the prior art in a smaller number of cutting positions than the prior art. Accordingly, the short circuit due to a conductive foreign material existing on the first electrode can easily be restored.

## BRIEF DESCRIPTION OF DRAWINGS

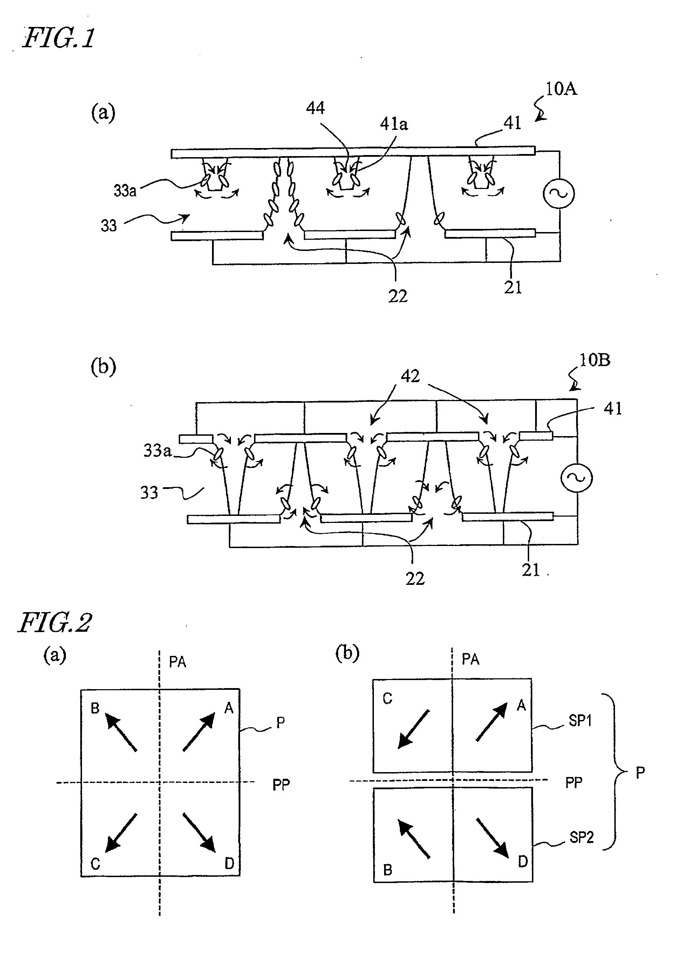

[FIG. 1] **(a)** and **(b)** are cross-sectional views schematically showing an exemplary fundamental configuration of an LCD in one embodiment of the present invention.

[FIG. 2] **(a)** and **(b)** are schematic plan views showing an exemplary arrangement of liquid crystal domains in one pixel of the LCD in one embodiment of the present invention, in which **(a)** schematically shows an arrangement of liquid crystal domains in a normal pixel, and **(b)** schematically shows an arrangement of liquid crystal domains in a pixel having multi-pixel configuration.

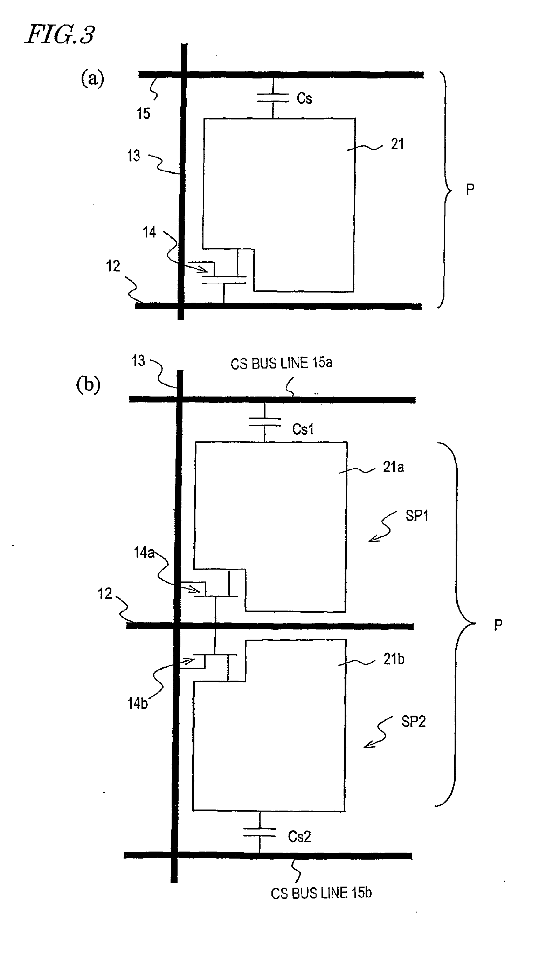

[FIG. **3**] **(a)** and **(b)** are plan views schematically showing an electric configuration of a pixel, in which **(a)** shows an electric configuration of a normal pixel, and **(b)** shows an electric configuration of a pixel having multi-pixel configuration.

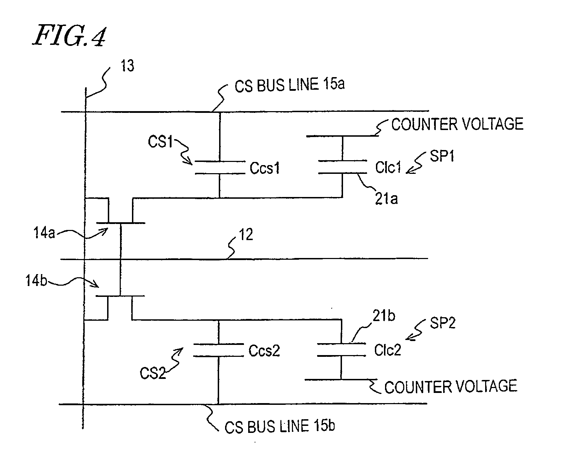

[FIG. **4**] FIG. **4** is a diagram showing an equivalent circuit of the liquid crystal display device in one embodiment of the present invention.

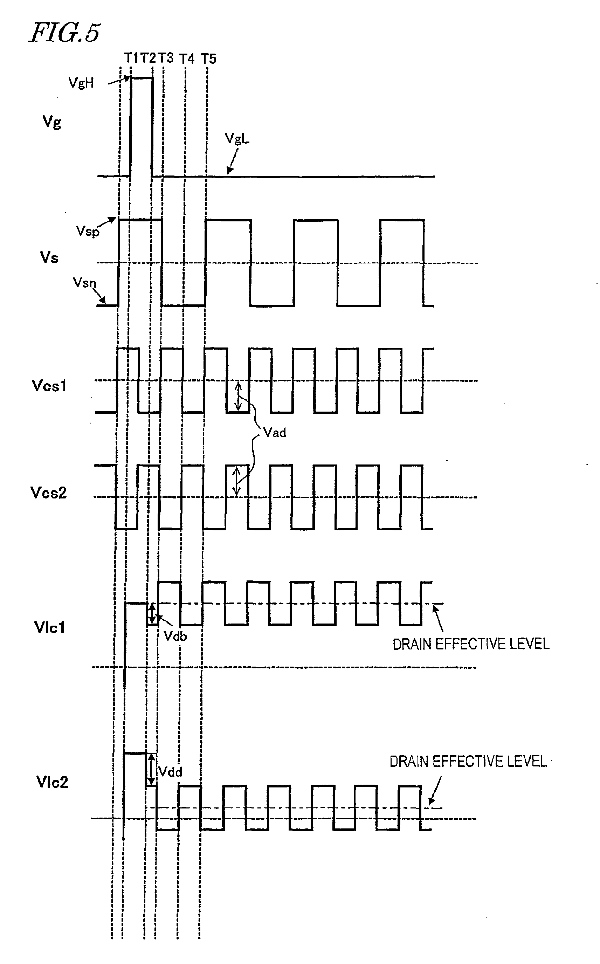

[FIG. **5**] FIG. **5** is a diagram showing exemplary voltage waveforms and timings of respective signals for driving the liquid crystal display device shown in FIG. **4.**

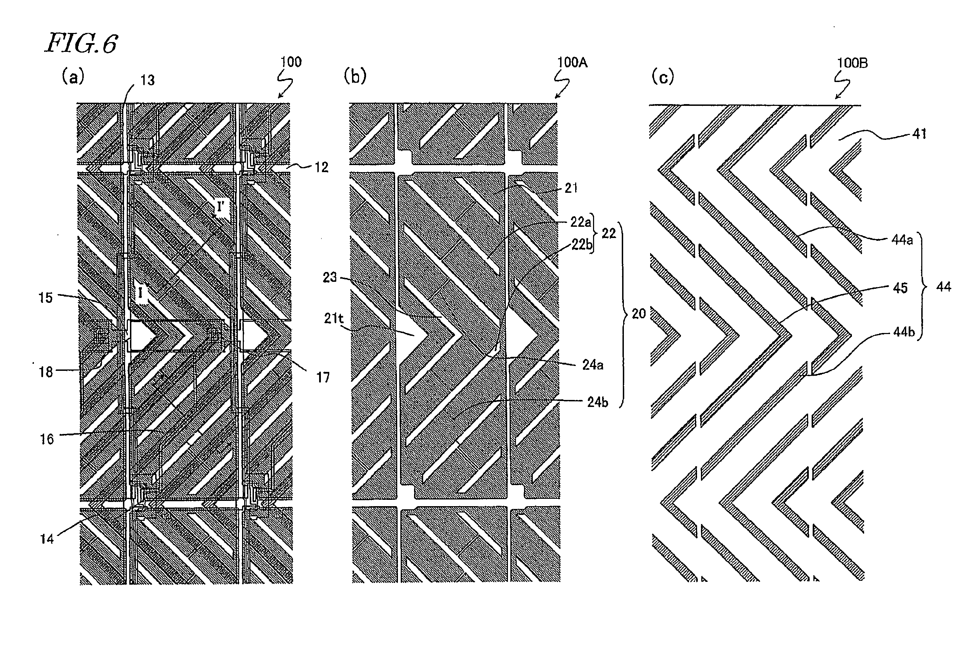

[FIG. **6**] **(a)** to **(C)** are views for illustrating the pixel configuration of an LCD **100** in one embodiment of the present invention, in which **(a)** is a plan view showing the configuration of one pixel of the LCD **100, (b)** is a plan view showing a continuous opening pattern **20** formed in a first substrate **100A,** and **(c)** is a plan view showing a dielectric projecting pattern **44** formed on a second substrate **100B.**

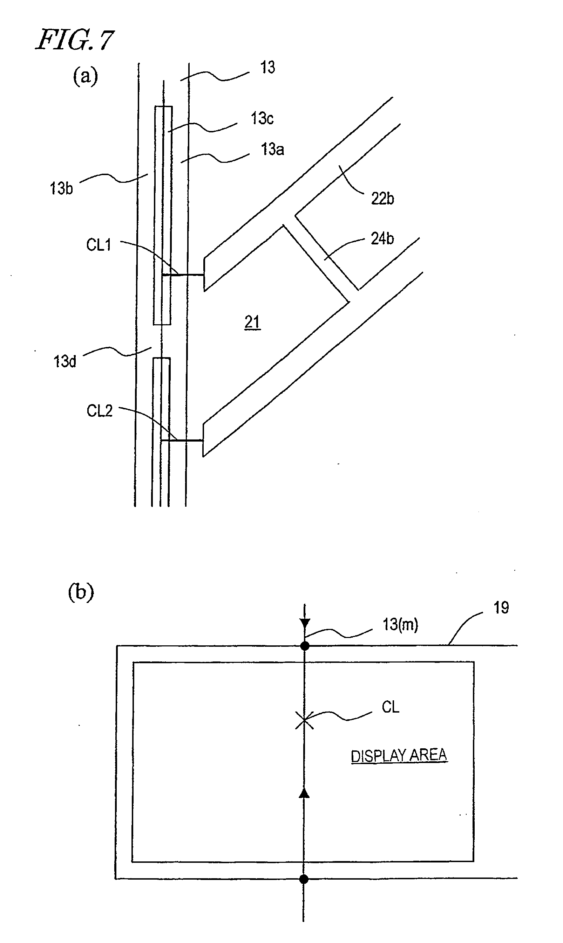

[FIG. **7**] **(a) and (b)** are diagrams for illustrating a method for restoring a short-circuit failure, in which **(a)** is a schematic diagram in the case with a source bus line having a ladder structure, and **(b)** is a schematic diagram in the case with a redundancy wiring **19.**

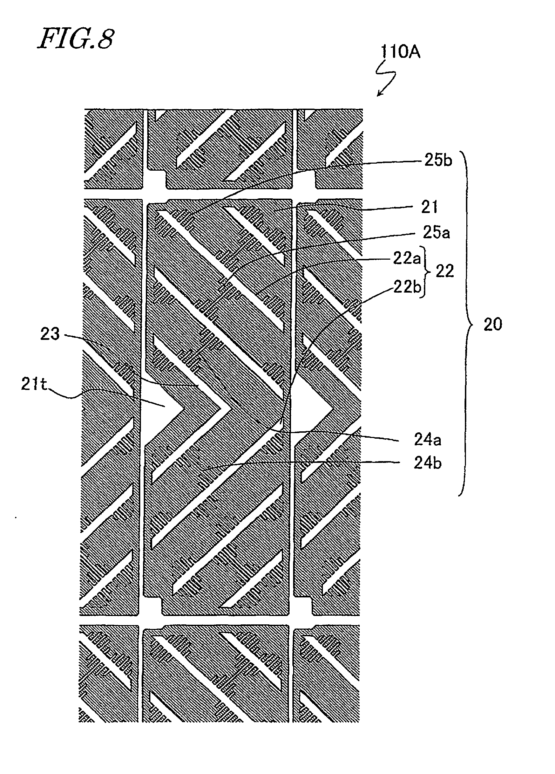

[FIG. **8**] FIG. **8** is a plan view showing a continuous opening pattern **20** formed in a first substrate **110A** which is used instead of the first substrate **100A** of the LCD **100** shown in FIG. **6.**

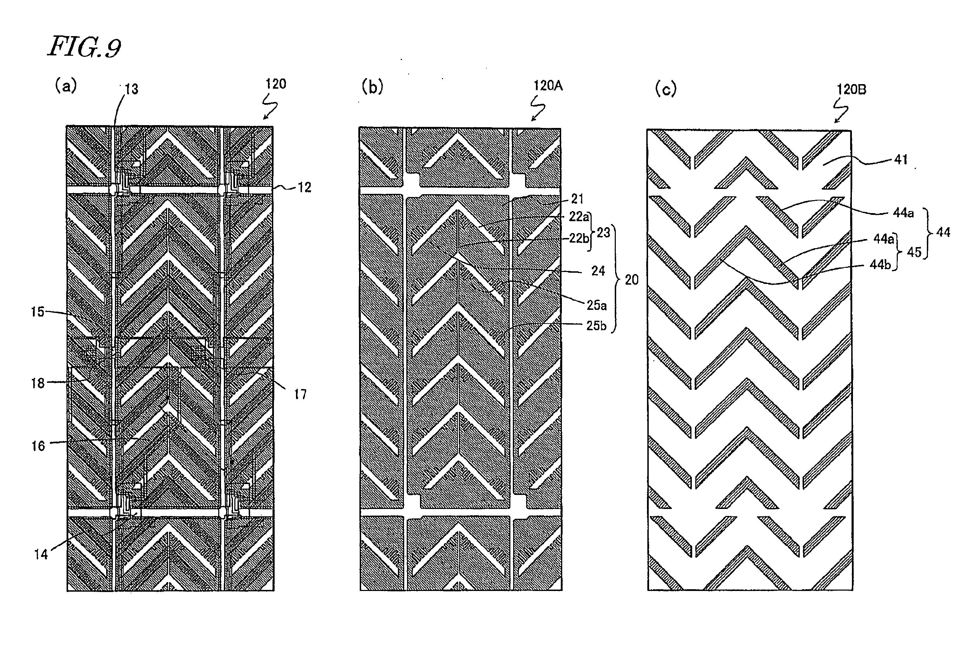

[FIG. **9**] **(a)** to **(c)** are views for illustrating the pixel configuration of an LCD **120** in another embodiment of the present invention, in which **(a)** is a plan view showing the configuration of one pixel of the LCD **120, (b)** is a plan view showing a continuous opening pattern **20** formed in a first substrate **120A,** and **(c)** is a plan view showing a dielectric projecting pattern **44** formed on a second substrate **120B.**

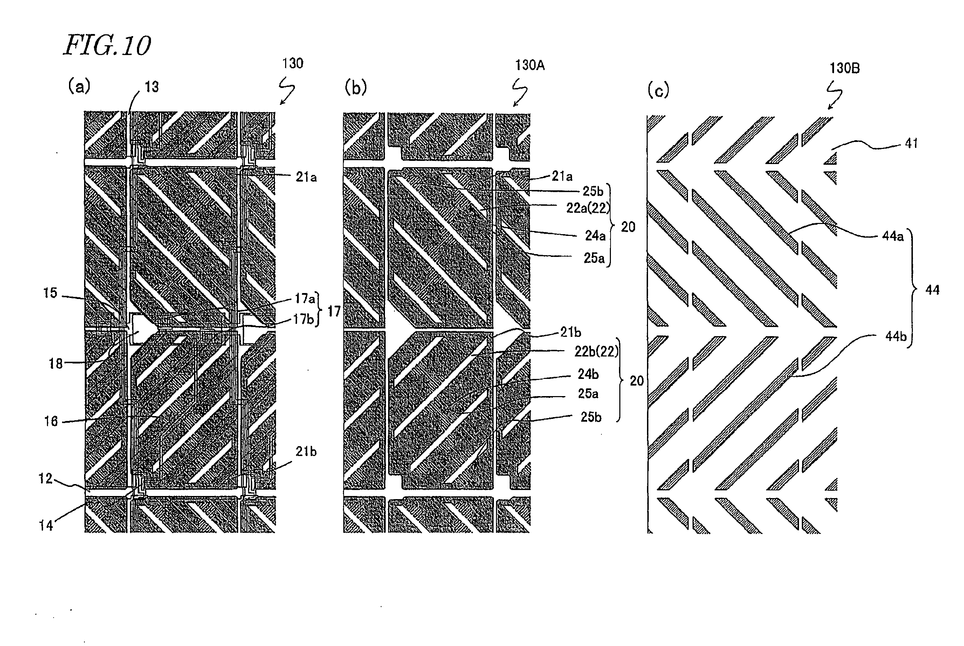

[FIG. **10**] **(a)** to **(c)** are views for illustrating the pixel configuration of an LCD **130** in still another embodiment of the present invention, in which **(a)** is a plan view showing the configuration of one pixel of the LCD **130, (b)** is a plan view showing a continuous opening pattern **20** formed in a first substrate **130A,** and **(c)** is a plan view showing a dielectric projecting pattern **44** formed on a second substrate **130B.**

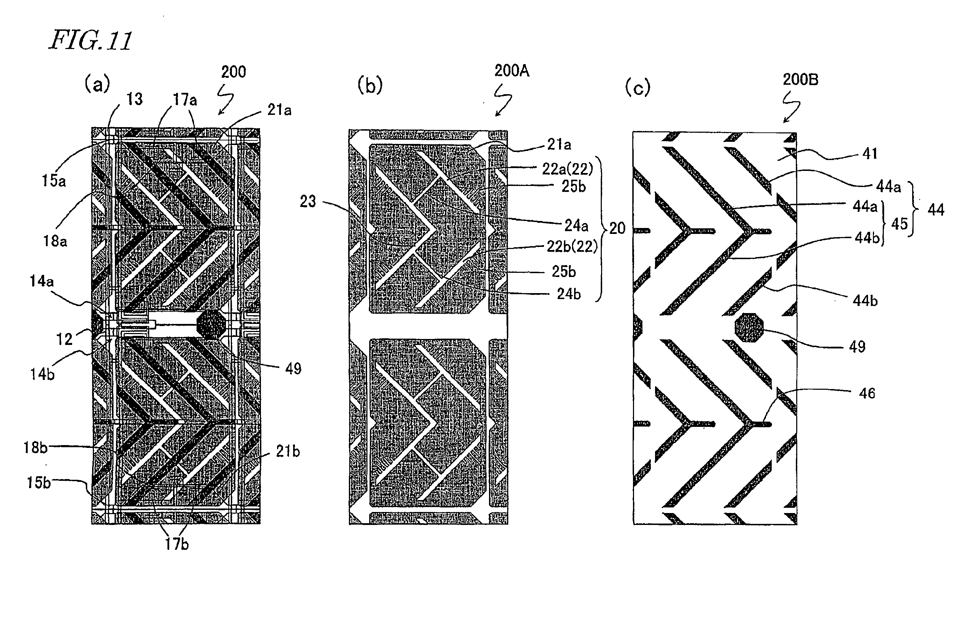

[FIG. **11**] **(a)** to **(c)** are views for illustrating the pixel configuration of an LCD **200** in still another embodiment of the present invention, in which **(a)** is a plan view showing the configuration of one pixel of the LCD **200, (b)** is a plan view showing a continuous opening pattern **20** formed in a first substrate **200A,** and **(c)** is a plan view showing a dielectric projecting patter **44** formed on a second substrate **200B.**

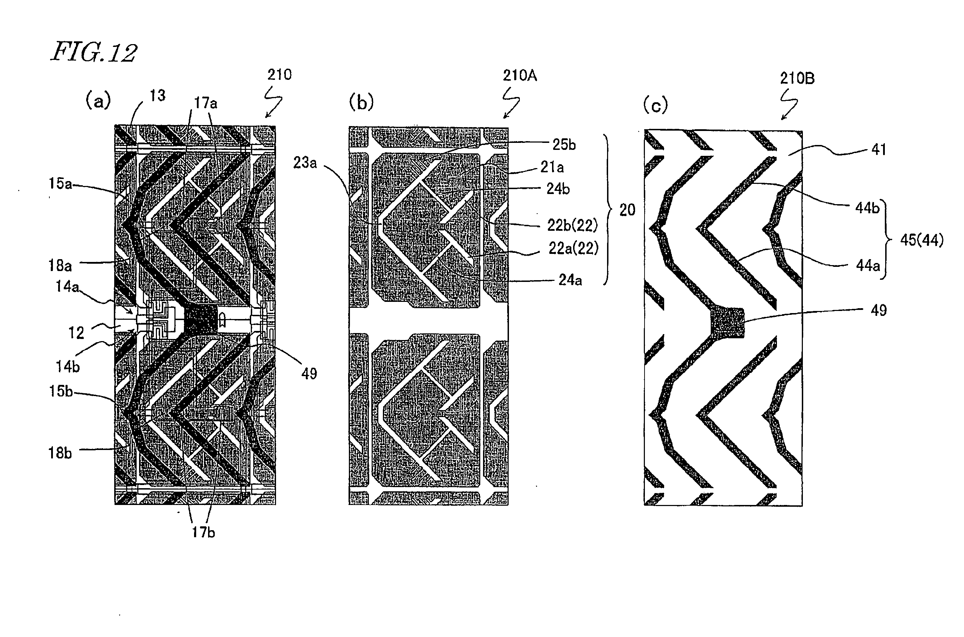

[FIG. **12**] **(a)** to **(c)** are views for illustrating the pixel configuration of an LCD **210** in still another embodiment of the present invention, in which **(a)** is a plan view showing the configuration of one pixel of the LCD **210**, **(b)** is a plan view showing a continuous opening pattern **20** formed in a first substrate **210A,** and **(c)** is a plan view showing a dielectric projecting pattern **44** formed on the second substrate **210B.**

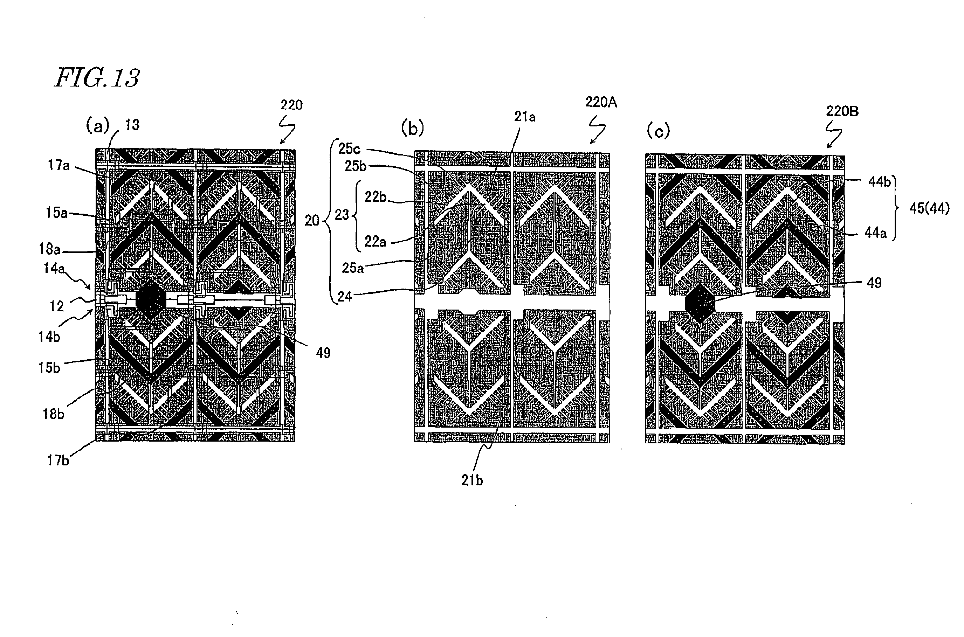

[FIG. **13**] **(a)** to **(c)** are views for illustrating the pixel configuration of an LCD **220** in still another embodiment of the present invention, in which **(a)** is a plan view showing the configuration of two pixels of the LCD **220, (b)** is a plan view showing a continuous opening pattern **20** formed in a first substrate **220A,** and **(c)** is a plan view showing a dielectric projecting pattern **44** formed on a second substrate **220B.**

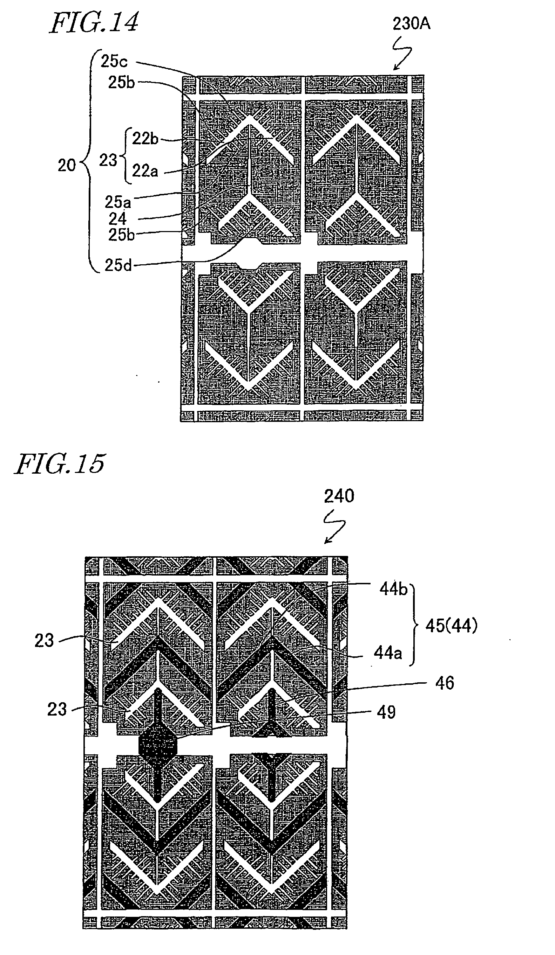

[FIG. **14**] FIG. **14** is a plan view showing a continuous opening pattern **20** formed in a first substrate **230A** used instead of the first substrate **220A** of the LCD **220** shown in FIG. **13.**

[FIG. **15**] FIG. **15** is a plan view showing a dielectric projecting pattern **44** in an LCD **240** in which the second substrate **220B** of the LCD **220** shown in FIG. **13** is changed.

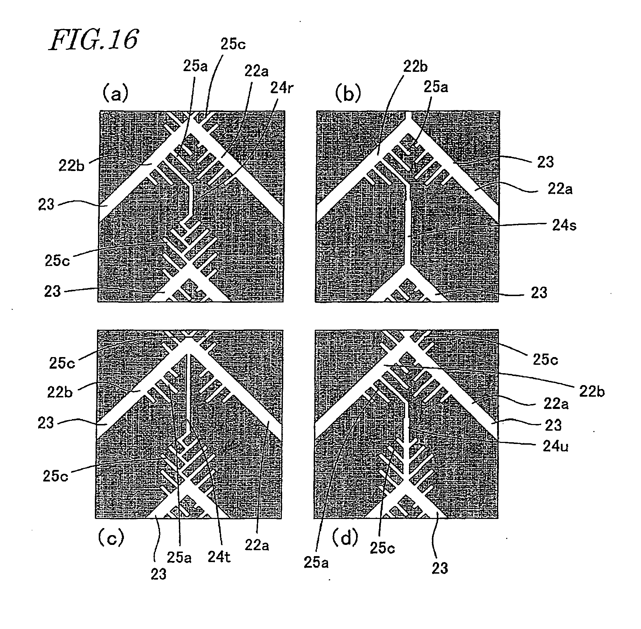

[FIG. **16**] **(a)** to **(d)** are plan views for illustrating variations of a linear coupling portion.

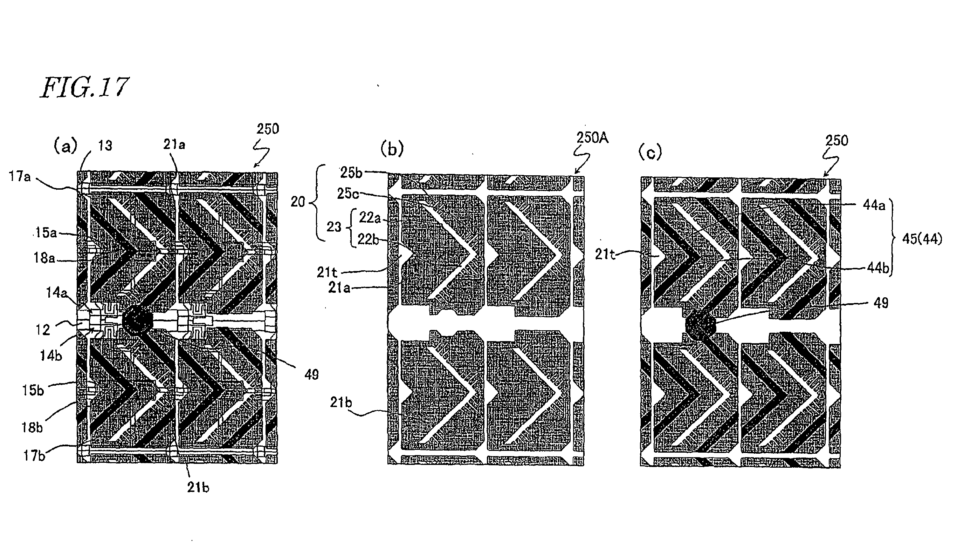

[FIG. **17**] **(a)** to **(c)** are views for illustrating the pixel configuration of an LCD **250** in still another embodiment of the present invention, in which **(a)** is a plan view showing the configuration of two pixels in the LCD **250, (b)** is a plan view showing a continuous opening pattern **20** formed in a first substrate **250A,** and **(c)** is a plan view showing a dielectric projecting pattern **44** formed on a second substrate **250B.**

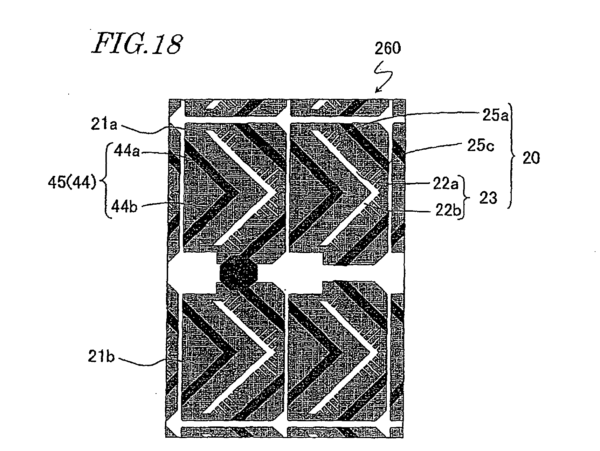

[FIG. **18**] FIG. **18** is a plan view showing first electrodes **21a** and **21b** in an LCD **260** in which the first substrate **250A** of the LCD **250** shown in FIG. **17** is changed.

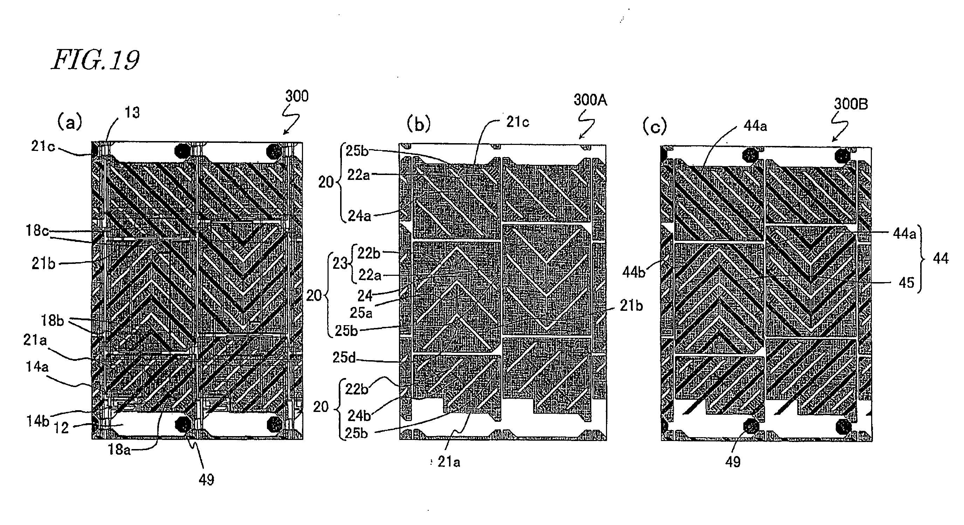

[FIG. **19**] **(a)** to **(c)** are views for illustrating the pixel configuration of an LCD **300** in still another embodiment of the present invention, in which **(a)** is a plan view showing the configuration of two pixels of the LCD **300, (b)** is a plan view showing a continuous opening pattern **20** formed in a first substrate **300A,** and **(c)** is a plan view showing a dielectric projecting pattern **44** formed on a second substrate **300B.**

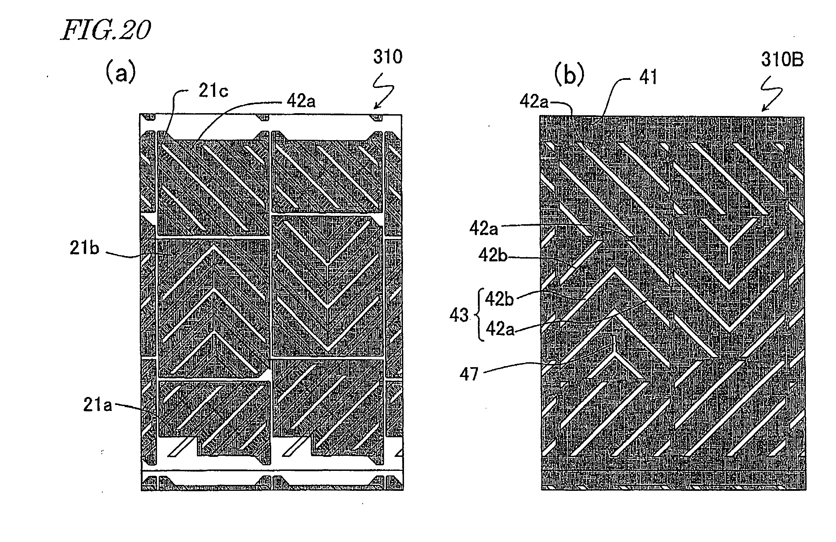

[FIG. **20**] **(a)** and **(b)** are views for illustrating the pixel configuration of an LCD **310** in still another embodiment of the present invention, in which **(a)** is a plan view showing the configuration of two pixels of the LCD **310** and a plan view showing a continuous opening pattern **20** and an opening pattern **42,** and **(b)** is a plan view showing a dielectric projecting pattern **44** formed on a second substrate **310B.**

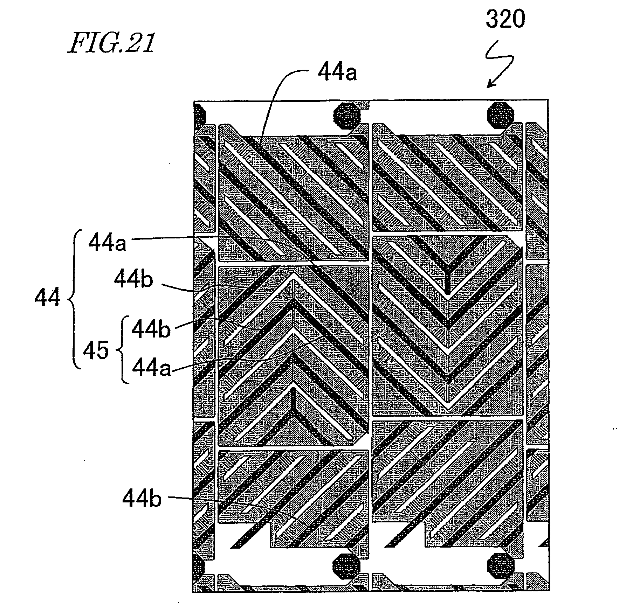

[FIG. **21**] FIG. **21** is a view showing the pixel configuration of an LCD **320** in still another embodiment of the present invention, and a plan view showing a dielectric projecting pattern **44.**

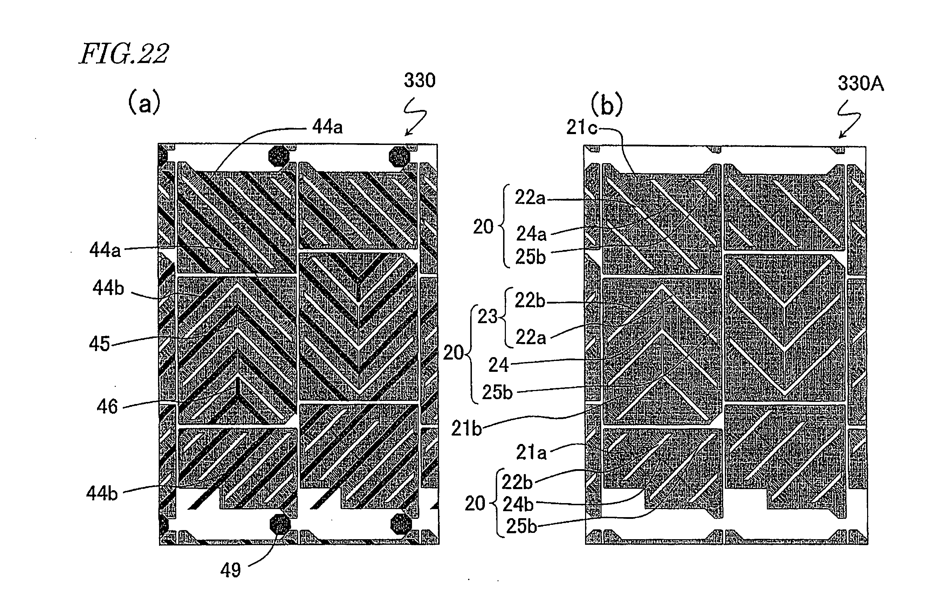

[FIG. **22**] **(a)** and **(b)** are views for illustrating the pixel configuration of an LCD **330** in still another embodiment of the present invention, in which **(a)** is a plan view showing a continuous opening pattern **20** and a dielectric projecting pattern **44,** and **(b)** is a plan view showing the continuous opening pattern **20.**

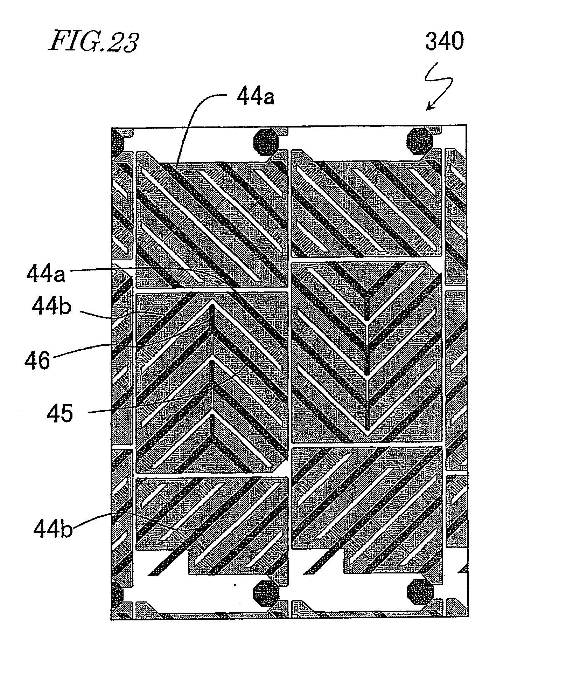

[FIG. **23**] FIG. **23** is a view for illustrating the pixel configuration of an LCD **340** in still another embodiment of the present invention.

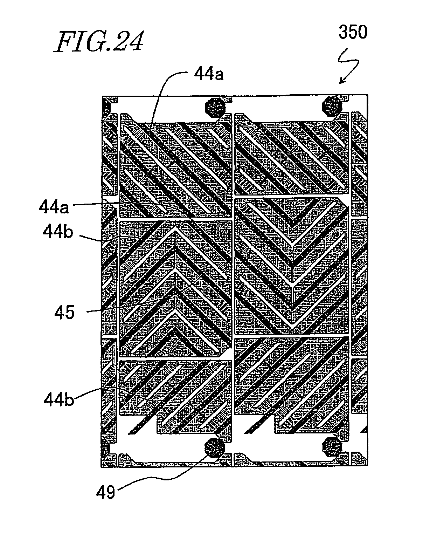

[FIG. **24**] FIG. **24** is a view for illustrating the pixel configuration of an LCD **350** in still another embodiment of the present invention.

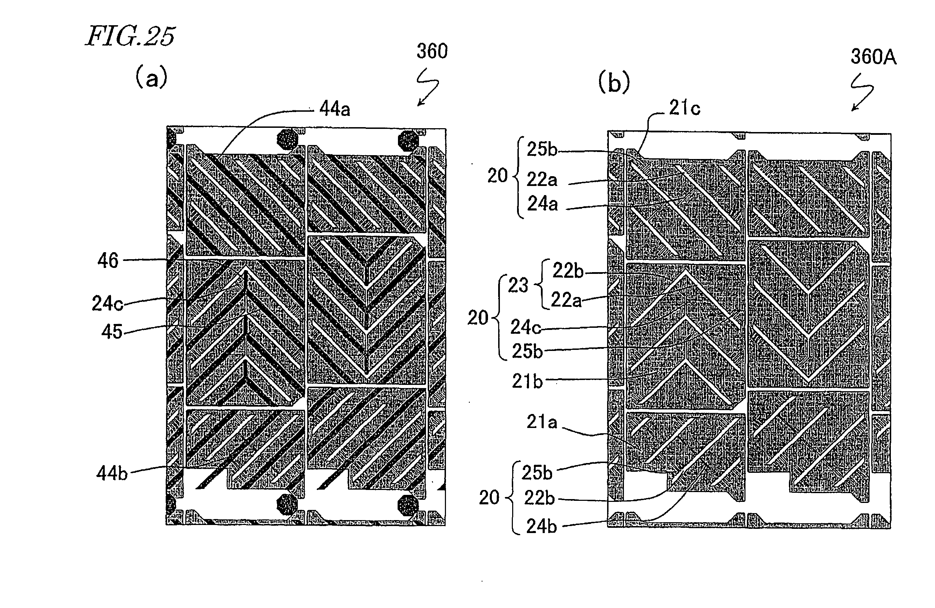

[FIG. **25**] **(a)** and **(b)** are views for illustrating the pixel configuration of an LCD **360** in still another embodiment of the present invention, in which **(a)** is a plan view showing a continuous opening pattern **20** and a dielectric projecting pattern **44,** and **(b)** is a plan view showing the continuous opening pattern **20.**

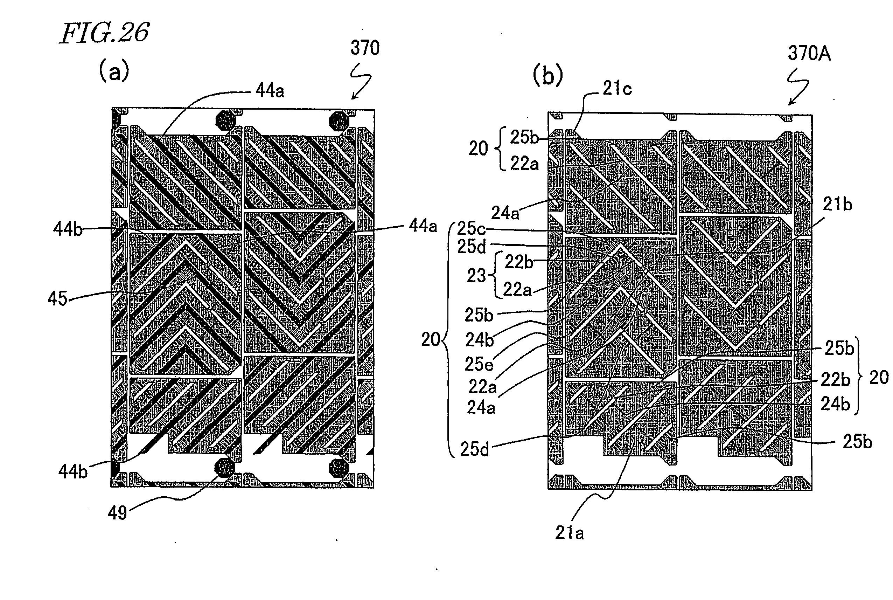

[FIG. **26**] **(a)** and **(b)** are views for illustrating the pixel configuration of an LCD **370** in still another embodiment of the present invention, in which **(a)** is a plan view showing a continuous opening pattern **20** and a dielectric projecting pattern **44,** and **(b)** is a plan view showing the continuous opening pattern **20.**

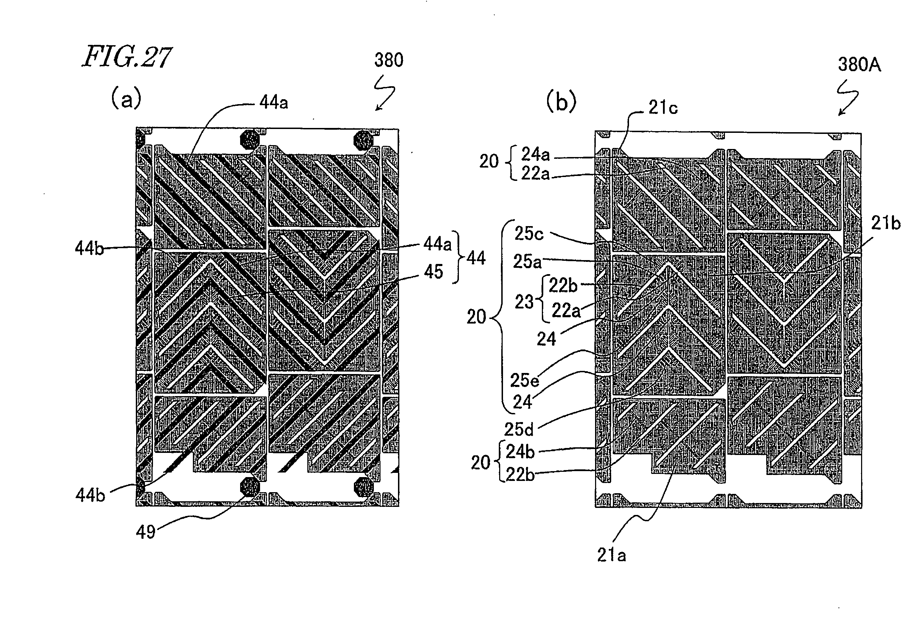

[FIG. **27**] **(a)** and **(b)** are views for illustrating the pixel configuration of an LCD **380** in still another embodiment of the present invention, in which **(a)** is a plan view showing a continuous opening pattern **20** and a dielectric projecting pattern **44,** and **(b)** is a plan view showing the continuous opening pattern **20** included in a first substrate **380A.**

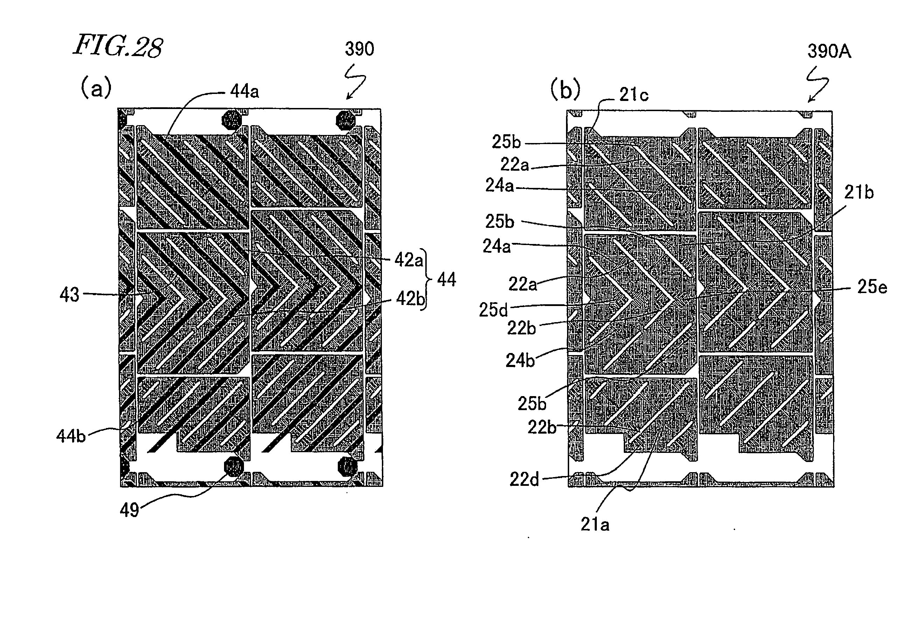

[FIG. **28**] **(a)** and **(b)** are views for illustrating the pixel configuration of an LCD **390** in still another embodiment of the present invention, in which **(a)** is a plan view showing a continuous opening pattern **20** and a dielectric projecting pattern **44,** and **(b)** is a plan view showing the continuous opening pattern **20** included in a first substrate **390A.**

## DESCRIPTION OF EMBODIMENTS

Hereinafter the configuration of an MVA liquid crystal display device (hereinafter abbreviated as an LCD) in one embodiment of the present invention will be described with reference to the drawings.

First, with reference to FIG. **1(a)** and FIG. **1(b),** the fundamental configuration of the MVA LCD in one embodiment of the present invention will be described.

The LCD **10A** and LCD **10B** are provided with a plurality of pixels, each including a first electrode **21** formed on a first substrate, a second electrode **41** formed on a second substrate, the second electrode **41** being opposite to the first electrode **21,** and a vertical alignment liquid crystal layer **33** disposed between the first electrode **21** and the second electrode **41.** In the vertical alignment liquid crystal layer **33,** liquid crystal molecules **33a** with negative dielectric anisotropy in no voltage application are aligned substantially vertically (e.g., 87° and more and 90° and less) to surfaces of the first electrode **21** and the second electrode **41.** Typically, the alignment can be attained by providing a vertical alignment film (not shown) on the respective surfaces of the first electrode **21** and the second electrode **41** on the side of the liquid crystal layer **33.** In the case where a dielectric protrusion (rib) or the like is provided as a domain regulating structure, the liquid crystal molecules **33a** are aligned substantially vertically with respect to the surface of the dielectric protrusion or the like on the side of the liquid crystal layer.

On the side of the first electrode **21** of the liquid crystal layer **33,** a first domain regulating structure **22** is provided, and on the side of the second electrode **41** of the liquid crystal layer **33,** a second domain regulating structure (an opening portion **42** or a dielectric protrusion **44**) is provided. In a liquid crystal region defined between the first domain regulating structure and the second domain regulating structure, the liquid crystal molecules **33a** are influenced by the alignment regulating power from the first domain regulating structure and the second domain regulating structure. When a voltage is applied between the first electrode **21** and the second electrode **41,** the liquid crystal molecules **33a** are tilted (inclined) in a direction indicated by an arrow in the figure. That is, the liquid crystal molecules **33a** are tilted in the uniform direction in the respective liquid crystal regions, so that each of the liquid crystal regions can be regarded as a domain.

The first domain regulating structure and the second domain regulating structure (they may sometimes be referred to collectively as "domain regulating structures") are respectively disposed linearly (in a strip-shaped manner) in the respective pixel. FIG. **1(a)** and FIG. **1(b)** are cross-sectional views of the linear domain regulating structures in a direction orthogonal to the extending direction thereof. On both sides of each of the domain regulating structures, liquid crystal domains in which the tilting directions of liquid crystal molecules **33a** are mutually different by 180° are formed.

The LCD **10A** shown in FIG. **1(a)** has an opening portion (a slit) **22** as the first domain regulating structure formed in the first electrode **21,** and a dielectric protrusion **44** as the second domain regulating structure formed on the second electrode **41** on the side of the liquid crystal layer **33.** The opening portion **22** and the dielectric protrusion **44** are extended linearly (in a strip-like manner). In the dielectric protrusion **44,** the liquid crystal molecules **33a** are directed in a direction substantially perpendicular to the side face **41a** thereof, so as to direct the liquid crystal molecules **33a** in a direction orthogonal to the extending direction of the dielectric protrusion **44.** As for the opening portion **22,** when a potential difference is formed between the first electrode **21** and the second electrode **41,** an oblique electric field is generated in the liquid crystal layer **33** in the vicinity of the edge of the opening portion **22,** so as to direct the liquid crystal molecules **33a** in a direction orthogonal to the extending direction of the opening portion **22.** The opening portions **22** and the dielectric protrusions **44** are located in parallel with each other at regular intervals. A liquid crystal domain is formed between an opening portion **22** and a dielectric protrusion **44** which are adjacent to each other.

An LCD **10B** shown in FIG. **1(b)** is different from the LCD **10A** shown in FIG. **1(a)** in that the LCD **10B** includes an opening portion **22** and an opening portion **42** as a first domain regulating structure and a second domain regulating structure, respectively. As for the opening portion **22** and the opening portion **42,** when a potential difference is formed between the first electrode **21** and the second electrode **41,** an oblique electric field is generated in the liquid crystal layer **33** in the vicinity of edges of the opening portions **22** and **42,** so as to direct the liquid crystal molecules **33a** in a direction orthogonal to the extending direction of the opening portions **22** and **42.** The opening portion **22** and the opening portion **42** are located in parallel with each other at regular intervals, and a liquid crystal domain is formed between them.

In the MVA LCD in one embodiment of the present invention, the first electrode **21** is a pixel electrode (or a sub-pixel electrode), and the second electrode **41** is a counter electrode. The first domain regulating structure is the opening portion **22** formed in the first electrode **21,** and the second domain regulating structure is the dielectric protrusion **44** formed on the side of the liquid crystal layer **33** of the counter electrode **41** or the opening portion **42** formed in the counter electrode **42.**

In addition, as described later by way of a specific example, the first domain regulating structure includes a first linear component extending in a first direction, and a second linear component extending in a second direction which is different from the first direction by about 90°. The second domain regulating structure includes a third linear component extending in the first direction (parallel to the first linear component), and a fourth linear component extending in the second direction (parallel to the second linear component). As for at least one of the first and second linear components and the third and second linear components, there exist plural components. When viewed from a normal direction to the first substrate, the first linear component and the third linear component are alternately disposed, and the second linear component and the fourth linear component are alternately disposed.

Accordingly, when a voltage is applied across the liquid crystal layer of an arbitrary pixel, between the first linear component and the third linear component and between the second linear component and the fourth linear component, four domains in which the tilt directions of the liquid crystal molecules are mutually different by about 90° are formed.

FIG. **2(a)** and FIG. **2(b)** are schematic plan views showing an exemplary arrangement of liquid crystal domains in one pixel of an MVA LCD in one embodiment of the present invention. FIG. **2(a)** schematically shows the arrangement of liquid crystal domains in a normal pixel, and FIG. **2(b)** schematically shows the arrangement of liquid crystal domains in a pixel having multi-pixel structure. The letters PP in FIG. **2(a)** and FIG. **2(b)** indicate a polarization axis of a polarization plate on a back-face side (on the side of a back light), and the letters PA indicate a polarization axis of a polarization plate on the side of an observer.

As shown in FIG. **2(a),** in the case of the normal pixel, four domains **A, B, C,** and **D** are formed in one pixel **P.** In the domains **A, B, C,** and **D,** directions in which liquid crystal molecules are tilted when a voltage is applied across the liquid crystal layer (referred to as "alignment directions of directors of liquid crystal domains") are mutually different by about 90°. In the case of the multi-pixel structure, as shown in FIG. **2(b),** four liquid crystal domains **A, B, C,** and **D** are formed in one pixel **P.** In respective sub-pixels **SP1** and **SP2,** only a pair of liquid crystal domains having alignment directions of directors which are mutually different by 180° may be formed. It is understood that the first and second domain regulating structures may be disposed so as to form four liquid crystal domains **A** to **D** in each sub-pixel. In addition, each pixel **P** may have two or more respective liquid crystal domains **A** to **D.**

Next, with reference to FIG. **3** to FIG. **5,** the multi-pixel structure of the MVA LCD in one embodiment of the present invention will be described.

FIG. **3(a)** and FIG. **3(b)** are plan views schematically showing the pixel configuration. FIG. **3(a)** shows the pixel configuration of a normal pixel, and FIG. **3(b)** shows the pixel configuration having a multi-pixel structure. In both figures, the second electrode (a counter electrode) **41** is omitted.

As shown in FIG. **3(a),** the normal pixel **P** is defined by a first electrode (a pixel electrode) **21.** The first electrode **21** is electrically connected to a source bus line **13** via a TFT **14** which is connected to a gate bus line **12.** A CS capacitance is formed in parallel with a liquid crystal capacitance constituted by the first electrode **21,** and the liquid crystal layer and the second electrode. One end of the CS capacitance is connected to the first electrode **21,** and the other is connected to a CS bus line **15.**

On the other hand, the pixel **P** having the multi-pixel structure is divided into a sub-pixel **SP1** and a sub-pixel **SP2,** as shown in FIG. **3(b).** To first pixel electrodes (sub-pixel electrodes) **21a** and **21b** constituting the sub-pixels **SP1** and **SP2,** corresponding TFT **14a,** TFT **14b,** and storage capacitors **CS1** and **CS2** are connected, respectively. Gate electrodes of the TFT **14a** and TFT **14b** are connected to a common gate bus line (a scanning line) **12,** and source electrodes of the TFT **14a** and TFT **14b** are connected to a common (the same) source bus line (a signal line) **13.** The storage capacitors **CS1** and **CS2** are connected to corresponding CS bus lines (storage capacitor lines) **15a** and **15b,** respectively. The storage capacitors **CS1** and **CS2** are constituted by storage capacitor electrodes electrically connected to the first electrodes **21a** and **21b,** respectively, storage capacitor counter electrodes electrically connected to the CS bus lines **15a** and **15b,** and an insulating layer (not shown, e.g., a gate insulating layer) formed therebetween. The storage capacitor counter electrodes of the storage capacitors **CS1** and **CS2** are mutually independent, and have the structures in which storage capacitor counter voltages (also referred to as "CS signals") which is mutually different can be supplied from the CS bus lines **15a** and **15b,** respectively.

A display signal voltage is supplied from the common source bus line **13** to the first electrode **21a** and the first electrode **21b,** so as to turn off the TFT **14a** and the TFT **14b.** Thereafter, variations (defined by the direction and the magnitude of variation) of voltages of the storage capacitor counter electrodes of the storage capacitors **CS1** and **CS2** (i.e., voltages supplied from the CS bus line **15a** or the CS bus line **15b**) are differentiated, so as to attain a condition where effective voltages to be applied across the liquid crystal capacitances of the respective sub-pixels **SP1** and **SP2** are different, i.e., a condition with different degrees of luminance. With such a configuration, display signal voltages can be supplied to the two sub-pixels **SP1** and **SP2** from one source bus line **13,** so that the luminance of the sub-pixels **SP1** and **SP2** can be mutually differentiated without increasing the number of source bus lines and the number of source drivers.

For example, with respect to a supplied display signal voltage, the display luminance of the sub-pixel **SP1** is higher than the sub-pixel **SP2.** Herein the sub-pixel **SP1** does not necessarily perform the display with higher luminance than the sub-pixel **SP2** with respect to all of the display signal voltages (gray-scale display signals), but may perform the display with higher luminance with respect to at least one halftone display signal voltage. Typically, in all of the halftone gray scales excluding black (the lowest gray scale) and white (the highest gray scale), for example, the sub-pixel **SP1** performs the display with higher luminance than the sub-pixel **SP2.** Alternatively, the order of luminance may be changed for each frame, for example.

Next, with reference to FIG. **4** and FIG. **5,** the multi-pixel driving method will be briefly described. FIG. **4** is a diagram showing an equivalent circuit of an LCD having the multi-pixel structure. FIG. **5** is a chart showing exemplary voltage waveforms and timings of respective signals for driving the LCD shown in FIG. **4.**

By applying voltages of respective bus lines shown in FIG. **5,** the sub-pixel **SP1** is a light sub-pixel, and the sub-pixel **SP2** is a dark sub-pixel. The reference letter **Vg** denotes a gate voltage, **Vs** denotes a source voltage, **Vcs1** and **Vcs2** denote voltages of respective storage capacitors of the sub-pixel **SP1** and the sub pixel **SP2,** and **Vlc1** and **Vlc2** denote voltages of pixel electrodes of the sub-pixel **SP1** and the sub-pixel **SP2,** respectively.

In the present embodiment, as shown in FIG. **5,** for a medium value **Vsc** of the source voltage, **Vsp** is applied to the source voltage as a plus polarity. To **CS1** and **CS2,** a signal in which the voltage thereof is caused to oscillate at an amplitude voltage **Vad,** and the phases of **CS1** and **CS2** are shifted by 180 degrees is input.

At time **T1, Vg** is varied from VgL to VgH, and the TFTs of both sub-pixels are turned ON, so that the voltage of **Vsp** is charged to the sub-pixel **SP1,** the sub-pixel **SP2,** and the storage capacitors **CS1** and **CS2.**

At time **T2, Vg** is varied from VgH to VgL, and the TFTs of both sub-pixels are turned OFF, so that the sub-pixel **SP1,** the sub-pixel **SP2,** and the storage capacitors **CS1** and **CS2** are electrically insulated from the source bus line. Immediately after this, due to the pull-in effect influenced by the parasitic capacitance and the like, pull-in voltages of Vdb and Vdd are caused in the sub-pixels **SP1** and **SP2,** respectively, and the voltage of the respective sub-pixels are represented as follows:

$$Vlc1=Vsp-Vdb$$

$$Vlc2=Vsp-Vdd.$$

At this time, the voltages **Vcs1** and **Vcs2** are represented as follows:

$$Vcs1=Vcom-Vad$$

$$Vcs2=Vcom+Vad$$

At time T3, the voltage **Vcs1** of the storage capacitor bus line **CS1** is varied from Vcom-Vad to Vcom+Vad, and the voltage **Vcs2** of the storage capacitor bus line **CS2** is varied from Vcom+Vad to Vcom-Vad. At this time, the pixel voltages **Vlc1** and **Vlc2** of the respective sub-pixels are represented as follows:

$$Vlc1=Vsp-Vdb+2 \cdot K \cdot Vad$$

$$Vlc2=Vsp-Vdd-2 \cdot K \cdot Vad,$$

where K=Ccs/(Clc(V)+Ccs). In the equations, the symbol "·" indicates the multiplication.

At time **T4,** the voltage **Vcs1** is varied from Vcom+Vad to Vcom-Vad, and the voltage **Vcs2** is varied from Vcom-Vad to Vcom+Vad. At this time, the sub-pixel voltages **Vlc1** and **Vlc2** are represented as follows:

$$Vlc1=Vsp-Vdb$$

$$Vlc2=Vsp-Vdd.$$

At time **T5,** the voltage **Vcs1** is varied from Vcom-Vad to Vcom+Vad, and **Vcs2** is varied from Vcom+Vad to Vcom-Vad. At this time, the sub-pixel voltages **Vlc1** and **Vlc2** are represented as follows:

$$Vlc1=Vsp-Vdb+2\cdot K\cdot Vad$$

$$Vlc2=Vsp-Vdd-2\cdot K\cdot Vad.$$

Thereafter, until the writing is performed in the condition of Vg=VgH, for every integral multiple of horizontal writing period **1H,** the voltages **Vcs1** and **Vcs2** and the voltages **Vlc1** and **Vlc2** alternately repeat the conditions of the time **T4** and the time **T5.** Accordingly, the effective values of **Vlc1** and **Vlc2** are represented as follows:

$$Vlc1=Vsp-Vdb+K\cdot Vad$$

$$Vlc2=Vsp-Vdd-K\cdot Vad.$$

In the n-th frame, the effective voltage applied across the liquid crystal layers of the respective sub-pixels are represented as follows:

$$V1=Vsp-Vdb+K\cdot Vad-Vcom$$

$$V2=Vsp-Vdd-K\cdot Vad-Vcom,$$

so that the sub-pixel **SP1** is a light sub-pixel, and the sub-pixel **SP2** is a dark sub-pixel.

Next, with reference to FIG. **6,** the pixel configuration of an LCD **100** in the embodiment of the present invention will be described. FIG. **6(a)** is a plan view showing the configuration of one pixel of the LCD **100.** FIG. **6(b)** is a plan view showing a continuous opening pattern **20** formed in a first substrate (a TFT substrate) **100A.** FIG. **6(c)** is a plan view showing a dielectric projecting pattern **44** formed on a second substrate (a counter substrate) **100B.** The aspect ratios in FIG. **6** and FIG. **8** to FIG. **28** reflect the actual aspect ratio of the pixel of the LCD.

The LCD **100** includes a normal pixel (without having a multi-pixel structure). As shown in FIG. **6(a),** the LCD **100** includes a gate bus line **12,** a source bus line **13,** a TFT **14,** a CS bus line **15,** a drain lead-out wiring **16,** a contact hall **17,** and a CS counter electrode **18.** The electric configuration of the LCD **100** is the same as shown in FIG. **3(a).**

As shown in FIG. **6(b),** a first electrode **21** has an opening portion **22** as a first domain regulating structure. The opening portion **22** has four first linear components **22a** (downward to the right by 45°) and four second linear components **22b** (downward to the left by 45°). Among them, one first linear component **22a** and one second linear component **22b** are directly coupled, thereby forming a V-shaped opening portion **23.** The four first linear components **22a** are mutually coupled via linear coupling opening portions **24a** which extend in a direction different from the first linear component **22a** by about 90°, and the four second linear components **22b** are mutually coupled via linear coupling opening portions **24b** which extend in a direction different from the second linear component **22b** by about 90°. Since the linear coupling opening portions **24a** and **24b** generate an electric field which disturbs the alignment of liquid crystal molecules in a liquid crystal domain, it is preferred that the widths thereof are smaller than the widths of the first linear component **22a** and the second linear component **22b.** As described above, all of the opening portions formed in the first electrode **21** are coupled, so as to form one continuous opening pattern **20.** The opening pattern **20** has a line symmetric characteristic with respect to a line parallel to the gate bus line **12** (or the CS bus line **15**) as an axis of symmetry.

At the left edge in the vicinity of the center in the column direction of the first electrode **21,** a notch **21t** having a side which is parallel to the V-shaped opening portion **23** is formed, so as to stabilize the orientation of liquid crystal molecules in the vicinity of the notch **21t.**

As shown in FIG. **6(c),** the second substrate **100B** has a dielectric projecting pattern **44** as a second domain regulating structure on the side of the liquid crystal layer of the second electrode **41.** The dielectric projecting pattern **44** has five third linear components **44a** (downward to the right by 45°) which are parallel to the first linear components **22a,** and five fourth linear components **44b** (downward to the left by 45°) which are parallel to the second linear components **22b.** Among them, two third linear components **44a** and two fourth linear components **44b** are directly coupled, so as to form two V-shaped dielectric protrusions **45.** As shown in FIG. **6(a),** the five third linear components **44a** and the five fourth linear components **44b** are arranged in parallel with the four first linear components **22a** and the four second linear components **22b** in an alternating manner. Between them, four kinds of liquid crystal domains (see FIG. **2(a))** are formed.

With reference to FIG. **6(b)** and FIG. **7,** advantages obtained by the condition where an opening portion functioning as the first domain regulating structure formed in the first electrode **21** (the first linear component and the second linear component) is part of the continuous opening pattern will be described.

As shown in FIG. **6(b),** since the opening pattern **20** is continuous, if end portions of two adjacent first linear components **22a,** end portions of two adjacent second linear components **22b** which exist in the vicinity of the edge of the first electrode **21,** or a portion from the end portion of the first linear component **22a** and the end portion of the second linear component **23a** to the edge of the first electrode **21** are cut off, a small region can be separated from the first electrode **21.**

For example, as shown in FIG. **7(a),** when the cut-off is performed from the end portions of the two adjacent second linear components **22b** to the edge of the first electrode **21** along cutting lines **CL1** and **CL2,** a portion surrounded by the two second linear components **22b,** the linear coupling opening portion **24b,** the cutting line **CL1** and **CL2,** and the edge of the first electrode **21** is separated from the first electrode **21,** i.e., becomes electrically independent from the first electrode **21.** Accordingly, in the case where any conductive foreign material exists in this region, and short circuit occurs between the first electrode **21** and the second electrode **41,** the short circuit can be restored by performing the cut-off along the cutting lines **CL1** and **CL2.** In FIG. **7(a),** for the simplicity, the representation of a first electrode **21** in a pixel which is adjacent in the row direction is omitted.

As shown in FIG. **6(b),** by utilizing the end portions of the continuous opening pattern **20,** small portions can be separated in 14 ways from the first electrode **21** by performing the cut-off only at two places. As described above, by adopting the configuration in which the continuous opening pattern **20** does not intersect with the edge of the first electrode **21,** the number of cut-off places to be selected can be increased, so that the short-circuit defect can be effectively restored.

Accordingly, as compared with the conventional configuration without the linear coupling opening portions **24a** and **24b,** the LCD **100** attains the advantage that the restoration can be performed with smaller number of cut-off points. In addition, a portion which is smaller as compared with the conventional one can be selected and electrically separated, so that it is possible to attain another advantage that the area which can be utilized after the restoration can be larger than that in the conventional case. It should be noted that if a portion including the contact hole **17** for electrically connecting the first electrode **21** to the drain of the TFT **14** is separated, the function as the first electrode **21** is lost.

Herein as exemplarily shown, in the case where only one contact hole **17** is provided, the short-circuit defect cannot be restored with the probability of 1/14. If a redundancy structure in which a plurality of contact holes **17** are formed is adopted, the number of cases where the short-circuit defect cannot be restored can be further reduced. However, in the configuration where a plurality of contact holes **17** are provided, if a portion including a certain one contact hole is separated from the first electrode **21,** the separated portion is electrically connected to the drain of the TFT via the contact hole, so that it is necessary to cut off the wiring from the contact hole included in the separated portion to the drain of the TFT. Accordingly, in the case where a plurality of contact holes are provided, the wirings for electrically connecting the respective contact holes to the drains of corresponding TFTs are provided with a branch-connection structure in which the wirings can be mutually independently cut off. Such a structure is disclosed in Japanese Laid-Open Patent Publication No.2002-55361 (e.g., FIG. **4**). For the purpose of reference, the entire disclosure of Japanese Laid-Open Patent Publication No.2002-55361 is hereby incorporated by reference.

In order to improve effective open area ratio, when the configuration in which part of the edge of the first electrode **21** overlaps the source bus line **13** is adopted, it is preferred that the source bus line **13** may adopt a ladder structure as shown in FIG. **7(a).** The source bus line 13 shown in FIG. **7(a)** includes two parallel main lines **13a** and **13b,** and a plurality of branch lines **13d** for mutually connecting the two parallel main lines **13a** and **13b.** An opening portion **13c** is formed in the source bus line **13.** Such a ladder structure is disclosed in International Publication No.07/34596. For the purpose of reference, the entire disclosure of International Publication No.07/34596 is hereby incorporated by reference.

In the case where such a ladder structure is adopted, when the first electrode **21** is cut off along the cutting lines **CL1** and **CL2,** even if the main line **13a** existing under them is cut off, the conductive condition can be ensured by the main line **13b,** so that there is no restriction for cutting positions.

Even in the case where the ladder structure is not used for the source bus line, as shown in FIG. **7(b),** it is sufficient that a redundancy wiring **19** may be provided. For example, in the case where the source bus line **13(m)** is cut off at point **CL** for restoration, the redundancy wiring **19** is connected at two places indicated by the symbol •, the display signal voltage can be supplied in a reverse direction of the source bus line **13(m).** The configuration provided with such a redundancy wiring is disclosed in Japanese Laid-Open Patent Publication No.2008-197583. For the purpose of reference, the entire disclosure of Japanese Laid-Open Patent Publication No.2008-197583 is hereby incorporated by reference.

Hereinafter, with reference to FIG. **8** through FIG. **28,** examples of opening pattern in an LCD in other embodiments of the present invention will be described. The common components are indicated by the common reference numerals, and the descriptions thereof may be omitted.

FIG. **8** is a plan view showing a continuous opening pattern **20** formed in a first substrate **110A** used instead of the first substrate **100A** in the LCD **100** shown in FIG. **6.**

The continuous opening pattern **20** of a first electrode **21** included in the first substrate **110A** has, in addition to the continuous opening pattern **20** of the first substrate **21** in the first substrate **100A,** a plurality of minute opening portions **25a** and **25b** which are parallel to a direction substantially orthogonal to the first linear components **22a** or the second linear components **22b.** The minute opening portions **25a** and **25b** have widths smaller than the width of the first linear component **22a** or the second linear component **22b.** For example, when the first linear component **22a** and the second linear component **22b** have the same width which is 7 $\mu$m to 17 $\mu$m, the minute opening portions **25a** and **25b** have the widths of 2 $\mu$m to 4 $\mu$m, respectively, and they are arranged mutually parallel at intervals of 2 $\mu$m to 4 $\mu$m.

The minute opening portion **25a** is formed in the vicinity of the linear coupling opening portions **24a** and **24b** thereby acting so as to stabilize the orientation of liquid crystal molecules in the vicinity of the linear coupling opening portions **24a** and **24b.** The liquid crystal molecules between the mutually adjacent two minute opening portions **25a** are equally affected by the oblique electric field from the two minute opening portions **25a,** and also affected by the oblique electric field from the first linear component **22a** or the second linear component **22b,** so as to be aligned in parallel with a direction in which the minute opening portion **25a** extends. In order to stably orient the liquid crystal molecules in a direction orthogonal to the first linear component **22a** or the second linear component **22b,** it is preferred that the minute opening portion **25a** may be disposed in the direction orthogonal to the first linear component **22a** or the second linear component **22b.** However, in the range in which the above-mentioned effects can be attained, the direction may be deviated from the orthogonal relationship.

The minute opening portions **25b** are formed in the vicinity of the edge of the first electrode **21,** thereby acting so as to stabilize the orientation of liquid crystal molecules in the vicinity of the edge of the first electrode **21,** similarly to the minute opening portions **25a.** The minute opening portions **25b** are disposed only on the side on which the first linear component **22a** or the second linear component **22b** and the edge of the first electrode **21** form an acute angle. Alternatively, the minute opening portions **25b** may be disposed on the side on which the first linear component **22a** or the second linear component **22b** and the edge of the first electrode **21** form an obtuse angle, or may be disposed on both sides.

Herein the minute opening portions **25a** and **25b** are included in the continuous opening pattern **20.** It is not necessarily that the minute opening portions **25a** and **25b** are included in the continuous opening pattern **20,** but it is preferred that they may be coupled to the continuous opening pattern **20,** because the orientation of liquid crystal molecules may easily be stabilized by the influence of the oblique electric field from the first linear component **22a** or the second linear component **22b.**

Next, with reference to FIG. **9,** the pixel configuration of an LCD **120** in another embodiment of the present invention will be described. FIG. **9(a)** is a plan view showing the configuration of one pixel in the LCD **120.** FIG. **9(b)** is a plan view showing a continuous opening pattern **20** formed in a first substrate **120A.** FIG. **9(c)** is a plan view showing a dielectric projecting pattern **44** formed on a second substrate **120B.** The pixel of the LCD **120** is also a normal pixel similarly to the LCD **100.**

As shown in FIG. **9(b),** a first electrode **21** in the LCD **120** includes a V-shaped opening portion **23** in which the continuous opening pattern **20** includes both of the first linear component **22a** and the second linear component **22b.** The pixel has a rectangular shape having a longer side in the column direction. In the first electrode **21,** six V-shaped opening portions **23** are arranged with an axis parallel to the longer side as an axis of symmetry.

The continuous opening pattern **20** in the first electrode **21** includes a plurality of V-shaped opening portions **23,** and also includes a linear opening portion **24** extending in a direction by which the interior angle of the V-shaped opening portion **23** is divided into two equal parts. The linear opening portion **24** is parallel to the longer side of the first electrode **21.** The linear opening portion **24** is coupled to the center of the plurality of V-shaped opening portions **23.**

The continuous opening pattern **20** of the first electrode **21** further includes a minute opening portion **25a** formed in the vicinity of the center of the V-shaped opening portion **23.** The minute opening portion **25a** acts so as to stabilize the orientation of liquid crystal molecules in the vicinity of the center of the V-shaped opening portion **23.** The continuous opening pattern **20** has a minute opening portion **25b** formed in the vicinity of the edge of the first electrode **21.** The minute opening portion **25b** acts so as to stabilize the orientation of liquid crystal molecules in the vicinity of the edge of the first electrode **21.**

As shown in FIG. **9(c),** on the side of a liquid crystal layer of a second electrode **41,** a dielectric projecting pattern **44** as a second domain regulating structure is formed. The dielectric projecting pattern **44** has seven third linear components **44a** (downward to the right by 45°) and seven fourth linear components **44b** (downward to the left by 45°). Among them, six third linear components **44a** and six fourth linear components **44b** are directly coupled, thereby forming six V-shaped dielectric protrusions **45.** As shown in FIG. **9(c),** the seven third linear components **44a** and the seven fourth linear components **44b** are arranged parallel to the six first linear components **22a** and the six second linear components **22b** in an alternating manner. Between them, four kinds of liquid crystal domains (see FIG. **2(a)**) are formed.

As described above, in the case where the pixel has a rectangular shape, if the V-shaped opening portion **23** and the V-shaped dielectric protrusion **45** are arranged with the axis parallel to the longer side as an axis of symmetry, the orientation of liquid crystal molecules in the pixel can be efficiently controlled. In other words, separation into small equal regions can be easily performed as compared with the case where the V-shaped opening portion **23** and the V-shaped dielectric protrusion **45** are arranged with the axis parallel to the shorter side as an axis of symmetry.

Next, with reference to FIG. **10,** the pixel configuration of an LCD **130** in another embodiment of the present invention will be described. FIG. **10(a)** is a plan view showing the configuration of one pixel in the LCD **130.** FIG. **10(b)** is a plan view showing a continuous opening pattern **20** formed in a first substrate **130A.** FIG. **10(c)** is a plan view showing a dielectric projecting pattern **44** formed on a second substrate **130B.**

The pixel of the LCD **130** is also a normal pixel. However, the pixel includes two first electrodes **21a** and **21b,** as shown in FIG. **10(a).** Both of the first electrodes **21a** and **21b** are connected to a drain of one TFT **14** via contact holes **17a** and **17b,** so that the same voltage is supplied. In addition, a CS bus line **15** is common to the two first electrodes **21a** and **21b.** Thus, the pixel structure is not a multi-pixel structure.

As shown in FIG. **10(b),** the continuous opening pattern **20** of the first electrode **21a** has a first linear component **22a,** but does not have a second linear component **22b.** The continuous opening pattern **20** of the first electrode **21b** has the second linear component **22b,** but does not have the first linear component **22a,** contrary to the opening pattern **20** of the first electrode **21a.**

The continuous opening pattern **20** of the first electrode **21a** has four first linear components **22a.** They are coupled by linear coupling opening portions **24a** extending in a direction different from the first linear components **22a** by about 90°. The continuous opening portion **20** of the first electrode **21b** has four second linear components **22b.** They are coupled by linear coupling opening portions **24b** extending in a direction different from the second linear components **22b** by about 90°. Both of the continuous opening patterns **20** include a minute opening portion **25a** formed in the vicinity of the linear coupling opening portions **24,** and a minute opening portion **25b** formed in the vicinity of the edges of the first electrodes **21a** and **21b.**

A triangular notch is formed between the first electrode **21a** and the first electrode **21b.** This acts so as to stabilize the orientation of liquid crystal molecules, similarly to the notch **21t** shown in FIG. **6(b).** The notch may be omitted.

As shown in FIG. **10(c),** the dielectric projecting pattern **44** in a region corresponding to the first electrode **21a** has five third linear components **44a,** and the dielectric projecting pattern **44** in a region corresponding to the first electrode **21b** has five fourth linear components **44b.** As shown in FIG. **10(a),** the five third linear components **44a** and the five fourth linear components **44b** are arranged in parallel with the four first linear components **22a** and the four second linear components **22b** in an alternating manner. Between them, four kinds of liquid crystal domains (see FIG. **2(a)**) are formed. Between adjacent pixels, positions of the opening pattern **22** and the dielectric projecting pattern **44** are slightly shifted.

Next, with reference to FIG. 11, the pixel configuration of in an LCD **200** in still another embodiment of the present invention will be described. FIG. **11(a)** is a plan view showing the configuration of one pixel of the LCD 200. FIG. **11(b)** is a plan view showing a continuous opening pattern **20** formed in a first substrate **200A.** FIG. **11(c)** is a plan view showing a dielectric projecting pattern **44** formed on a second substrate **200B.**

The pixel of the LCD **200** has a multi-pixel structure. As shown in FIG. **11(a) ,** the pixel has two first electrodes **21a** and **21b** which are connected to a common source bus line **13** via respectively corresponding TFTs **14a** and **14b.** The ON/OFF control of the TFTs **14a** and **14b** is performed by a common gate bus line **12** located between the first electrode **21a** and the second electrode **21b.** The first electrodes **21a** and **21b** are connected to drains of the corresponding TFTs **14a** and **14b** through contact holes **17a** and **17b,** respectively. CS bus lines **15a** and **15b** are mutually independent. Between the CS bus lines and CS counter electrodes **18a** and **18b,** CS capacitances are formed, respectively. The pixel of the LCD **200** is represented by the equivalent circuit shown in FIG. **4,** and can be driven by the method described with reference to FIG. **5.**

A columnar spacer (also referred to as a photo spacer) **49** is located on the gate bus line **12** located between the first electrode **21a** and the first electrode **21b.**

As shown in FIG. **11(b),** the first electrode **21a** has two first linear components **22a** and two second linear components **22b.** One pair of them forms a V-shaped opening portion **23.** The two first linear components **22a** are mutually coupled via a linear coupling opening portion **24a.** The two second linear components **22b** are mutually coupled via a linear coupling opening portion **24b.** The first electrodes **21a** and **21b** also include minute opening portions **25b** formed in the vicinity of the edges thereof.

The first electrodes **21a** and **21b** are symmetrically disposed with respect to the gate bus line **12.** The two continuous opening patterns **20** of the first electrodes **21a** and **21b** have a line symmetric relationship with the gate bus line **12** as an axis of symmetry. The columnar spacer **49** disturbs the orientation of neighboring liquid crystal molecules, but the provision of the columnar spacer **49** on the gate bus line **12** which is generally formed from a light-shielding material can reduce the influence on display. The provision of the columnar spacer **49** between the first electrodes **21a** and **21b** having the line symmetric structure can make the influence on the display to be equal.

As shown in FIG. **11(c),** the dielectric projecting pattern **44** also has a line symmetric characteristic with respect to the gate bus line **12.** A region of the dielectric projecting pattern **44** corresponding to the first electrode **21a** has three third linear components **44a,** and a region of the dielectric projecting pattern **44** corresponding to the first electrode **21b** has three fourth linear components **44b.** In addition, the dielectric projecting pattern **44** has a linear dielectric protrusion **46** extending toward the superior angle from the pointed portion of the V shape of the V-shaped dielectric protrusion **45**. The linear dielectric protrusion **46** acts so as to stabilize the orientation of liquid crystal molecules in the vicinity of the pointed portion of the V shape of the V-shaped dielectric protrusion **45**.

As shown in FIG. **11(a),** the three third linear components **44a** and the three fourth linear components **44b** are arranged in parallel with the two first linear components **22a** and the two second linear components **22b** in an alternating manner. Between them, four kinds of liquid crystal domains (see FIG. **2(a)**) are formed.

Next, with reference to FIG. **12,** the pixel configuration of an LCD **210** in still another embodiment of the present invention will be described. FIG. **12(a)** is a plan view showing the configuration of one pixel in the LCD **210**. FIG. **12(b)** is a plan view showing a continuous opening pattern **20** formed in a first substrate **210A**. FIG. **12(c)** is a plan view showing a dielectric projecting pattern **44** formed on a second substrate **210B**.

The pixel in the LCD **210** also has, similarly to the pixel in the LCD **200,** the multi-pixel structure which is represented by the equivalent circuit shown in FIG. **4,** and can be driven by the method described with reference to FIG. **5**. Two CS bus lines **15a** and **15b** are located so as to cross the respective first electrodes **21a** and **21b** in the vicinity of the center thereof.

As shown in FIG. **12(b),** the first electrode **21a** has two first linear components **22a** and two second linear components **22b.** One pair of them forms a V-shaped opening portion **23a.** The V-shaped opening portion **23a** has a flat tip portion. The two first linear components **22a** are mutually coupled via a linear coupling opening portion **24a,** and the two second linear components **22b** are mutually coupled via a linear coupling opening portion **24b.** There is a minute opening portion **25b** formed in the vicinity of the edges of the first electrodes **21a** and **21b.**

The first electrodes **21a** and **21b** are located in a symmetric manner with respect to the gate bus line **12.** The continuous opening pattern in the two first electrodes **21a** and **21b** has a line symmetric relationship with the gate bus line **12** as an axis of symmetry. Each of the continuous opening patterns **20** has a line symmetric character with the respectively corresponding CS bus line **15a** or **15b** as an axis of symmetry.

As shown in FIG. **12(c),** the dielectric projecting pattern **44** also has the line symmetric character with respect to the gate bus line **12.** The dielectric projecting pattern **44** in a region corresponding to the first electrode **21a** has two V-shaped dielectric protrusions **45.** The left one of the V-shaped dielectric protrusions **45** in FIG. **12 (c)** has a linear portion **44d** having a larger angle from the horizontal direction than the fourth linear component **44b** between the fourth linear component **44b** and the third linear component **44a,** and a linear portion **44c** having a larger angle from the horizontal direction than the fourth linear component **44b** between the third linear component **44a** and the fourth linear component **44b.** A columnar spacer **49** is formed on the gate bus line **12,** and formed integrally with the dielectric projecting pattern **44.**

The columnar spacer **49** may disturb the orientation of liquid crystal molecules in the vicinity thereof, but the provision of the columnar spacer **49** on the gate bus line **12** which is generally formed from a light shielding material can reduce the influence on the display. In addition, the provision between the first electrodes **21a** and **21b** having the line symmetric structure can make the influence on the display to be equal.

Next, with reference to FIG. **13,** the pixel configuration of an LCD **220** in still another embodiment of the present invention will be described. FIG. **13(a)** is a plan view showing the configuration of two pixels in the LCD **220.** FIG. **13(b)** is a plan view showing a continuous opening pattern **20** formed in a first substrate **220A.** FIG. **13(c)** is a plan view showing a dielectric projecting pattern **44** formed on a second substrate **220B.**

The LCD **220** has, similarly to the pixel of the LCD **210,** the multi-pixel structure which is represented by the equivalent circuit shown in FIG. **4** and can be driven by the method described with reference to FIG. **5**. The two CS bus lines **15a** and **15b** are located so as to cross the respective first electrodes **21a** and **21b** in the vicinity of the center thereof, respectively.

As shown in FIG. **13(b),** the first electrode **21a** has two first linear components **22a** and two second linear components **22b** which are directly coupled, thereby forming two V-shaped openings **23.** The pixel has a rectangular shape having a longer side in the column direction. The two V-shaped opening portions **23** included in the first electrode **21a** are disposed with the axis parallel to the longer side as an axis of symmetry. The two V-shaped opening portions **23** are mutually coupled via a linear opening portion **24** which extends in a direction for dividing the interior angle of the two V-shaped opening portions **23** into two equal parts. The linear opening portion **24** is coupled to the center of the two V-shaped opening portions **23.**

The first electrodes **21a** and **21b** are located in a symmetric manner with respect to the gate bus line **12.** The continuous opening patterns **20** of the two first electrodes **21a** and **21b** are in the line symmetric relationship with the gate bus line **12** as an axis of symmetry. The V-shaped opening portions **23** included in the two first electrodes **21a** and **21b** are located in such a manner that the upper side (the expanded side) of the V shape is directed to the gate bus line **12.** In other words, the V shape, a virtual extending line extending in a direction in which the V shape is spread from the V shape, and the gate bus line **12** constitute an isosceles triangle having the bending portion of the V shape as its apex. The apex angle of the two isosceles triangles is a right angle, so as to form a regular tetragon.

To the V-shaped opening portion **23,** the minute opening portions **25a, 25b,** and **25c** are coupled. The minute opening portion **25a** is formed in the vicinity of the linear coupling portion **24,** and acts so as to stabilize the orientation of liquid crystal molecules in the vicinity of the linear coupling opening portion **24.** The minute opening portion **25b** is formed in the vicinity of the edge of the first electrode **21,** and acts so as to stabilize the orientation of liquid crystal molecules in the vicinity of the edge of the first electrode **21,** similarly to the minute opening portion **25a.** The minute opening portion **25c** is formed on the superior angle side from the pointed portion of the V shape of the V-shaped opening portion **23,** and acts so as to stabilize the orientation of liquid crystal molecules in the vicinity of the pointed portion of the V shape of the V-shaped opening portion **23.** Specifically, the minute opening portion **25c** has the same function as the linear dielectric protrusion **46** included in the dielectric projecting pattern **44** shown in FIG. **11(c).** Since the minute opening portion **25c** is positioned in the vicinity of the edges of the first electrodes **21a** and **21b,** the minute opening portion **25c** also acts so as to stabilize the orientation of liquid crystal molecules in the vicinity of the edges.

As shown in FIG. **13(c),** the dielectric projecting pattern **44** has a V-shaped dielectric protrusion **45** including a third linear component **44a** (downward to the right by 45°) and a fourth linear component **44b** (downward to the left by 45°). As shown in FIG. **13(a),** the V-shaped dielectric protrusion **45** is located between the two V-shaped opening portions **23,** and between them, four kinds of liquid crystal domains (see FIG. **2(a)**) are formed.

As described above, if the plurality of V-shaped opening portions **23** and the V-shaped dielectric protrusion **45** are located with an axis parallel to the longer side of the pixel as an axis of symmetry, it is possible to attain an advantage that the degree of freedom in the arrangement of the contact holes **17a** and **17b** can be increased. In addition, the degree of freedom in the location of the columnar spacer **49** can be increased. As shown in FIG. **13(c),** the shape of the columnar spacer **49** when viewed from a direction perpendicular to the substrate is matched with the dielectric projecting pattern **44,** so as to stabilize the orientation of liquid crystal molecules in the vicinity of the columnar spacer **49.**

Fig. **14** shows a continuous opening pattern **20** formed in a first substrate **230A** which is used instead of the first substrate **220A** in the LCD **220** shown in FIG. **13.**

In the continuous opening pattern **20** shown in FIG. **14,** a minute opening portion **25d** is formed on the interior side of the V shape on the side closer to the gate bus line **12** in the two V-shaped opening portions **23** arranged in the column direction. The minute opening portion **25d** acts so as to stabilize the orientation of liquid crystal molecules on the inside of the V-shaped opening portions **23.**

Fig. **15** shows a dielectric projecting pattern **44** in the LCD **240** in which the second substrate **220B** in the LCD **220** shown in FIG. **13** is changed. The dielectric projecting pattern **44** in the LCD **240** includes, in addition to the V-shaped dielectric protrusion **45,** a linear dielectric protrusion **46** positioned on the inside of the V-shaped opening portion on the side closer to the gate bus line **12.** The linear dielectric protrusion **46** acts so as to stabilize the orientation of liquid crystal molecules on the inside of the V-shaped opening portions **23,** similarly to the minute opening portion **25d** shown in FIG. **14.**

Fig. **16(a)** to FIG. **16(d)** show exemplary variations of the coupling portion for coupling the V-shaped opening portions **23.**

In the opening pattern shown in FIG. **16(a),** part of the minute opening portion **25c** formed on the superior angle side from the pointed portion of the V shape of the lower one of the V-shaped opening portions **23** is coupled to one of the minute opening portions **25a** formed on the inside of the upper one of the V-shaped opening portions **23** via a linear coupling opening portion **24r.**

In the opening pattern shown in FIG. **16(b),** the linear coupling opening portion **24s** extending on the superior angle side from the pointed portion of the V shape of the lower one of the V-shaped opening portions **23** is coupled to one of the minute opening portions **25a** formed on the inside of the upper one of the V-shaped opening portions **23.**

In the opening pattern shown in FIG. **16(c),** the top end portion of the minute opening portion **25c** formed on the superior angle side from the pointed portion of the V shape of the lower one of the V-shaped opening portions is coupled to the center portion of the upper one of the V-shaped opening portions **23** via a linear coupling opening portion **24t.**

In the opening pattern shown in FIG. **16(d)** , a linear coupling opening portion **24u** formed on the superior angle side from the pointed portion of the V shape of the lower one of the V-shaped opening portions **23** is coupled to one of the minute opening portions **25a** formed on the inside of the upper one of the V-shaped opening portions **23.** Part of the minute opening portion **25c** formed on the superior angle side of the pointed portion of the lower one of the V-shaped opening portion **23** is coupled to a linear coupling opening portion **24u.**

With reference to FIG. **17,** the pixel configuration of an LCD **250** in still another embodiment of the present invention will be described. FIG. **17(a)** is a plan view showing the configuration of two pixels in the LCD **250.** FIG. **17(b)** is a plan view showing a continuous opening pattern **20** formed in a first substrate **250A.** FIG. **17(c)** is a plan view showing a dielectric projecting pattern **44** formed on a second substrate.

The LCD **250** has, similarly to the pixel of the LCD **210,** the multi-pixel structure which is represented by the equivalent circuit show in FIG. **4** and can be driven by the method described with reference to FIG. **5.** Two CS bus lines **15a** and **15b** are located so as to cross the respective first electrodes **21a** and **21b** in the vicinity of the respective centers thereof.

As shown in FIG. **17(b),** the first electrode **21a** has one first linear component **22a** and one second linear component **22b** which are mutually and directly coupled, thereby forming one V-shaped opening portion **23**. The pixel has a rectangular shape having a longer side in the column direction. The one V-shaped opening portion **23** included in the first electrode **21a** is located with an axis parallel to the shorter side as an axis of symmetry. To the V-shaped opening portion **23**, minute opening portions **25b** and **25c** are coupled.

At the left edge in the vicinity of the center in the column direction of the first electrodes **21a** and **21b**, a notch **21t** having a side parallel to the V-shaped opening portion **23** is formed, so as to stabilize the orientation of liquid crystal molecules in the vicinity of the notch **21t**.

The first electrodes **21a** and **21b** are located in a symmetry manner with respect to the gate bus line **12**. The continuous opening patterns **20** of the two first electrodes **21a** and **21b** have the line symmetric relationship with the gate bus line **12** as an axis of symmetry.

As shown in FIG. **17(c),** the dielectric projecting pattern **44** in a portion corresponding to the first electrode **21a** has two third linear components **44a** (downward to the right by 45°), and two fourth linear components **44b** (downward to the left by 45°). One pair of them is directly coupled, thereby forming one V-shaped dielectric protrusion **45**. As shown in FIG. **17(a),** the two third linear components **44a** and the two fourth linear components **44b** are arranged in parallel with one first linear component **22a** and one second linear component **22b** in an alternating manner. Between them, four kinds of liquid crystal domains (see FIG. **2(a)**) are formed.

As shown in FIG. **17(a)** and FIG. **17(c),** the columnar spacer **49** is formed on the gate bus line **12,** and formed (integrally) so as to overlap the pointed portion of the V shape of the V-shaped dielectric protrusion **45**.

With reference to FIG. **18,** shapes of the first electrodes **21a** and **21b** in an LCD **260** in which the first substrate **250A** in the LCD **250** shown in FIG. **17** is changed will be described. The first electrodes **21a** and **21b** in the LCD **260** shown in FIG. **18** are different from the first electrodes **21a** and **21b** in the LCD **250** shown in FIG. **17** in that the notch **21t** is not provided at the left edge in the vicinity of the center in the column direction of the first electrode **21a**. The notch **21t** has a side parallel to the V-shaped opening portion **23,** thereby acting so as to stabilize the orientation of liquid crystal molecules in the vicinity of the notch **21t**. However, the notch **21t** can be omitted as described above.

Next, with reference to FIG. **19** to FIG. **28,** the configuration of an LCD in an embodiment in which one pixel has three first electrodes **21a, 21b,** and **21c** will be described.

With reference to FIG. **19,** the pixel configuration of an LCD **300** in still another embodiment of the present invention will be described. FIG. **19(a)** is a plan view showing the configuration of two pixels in the LCD **300**. FIG. **19(b)** is a plan view showing a continuous opening pattern **20** formed in a first substrate **300A**. FIG. **19(c)** is a plan view showing a dielectric projecting pattern formed on a first substrate **300B**.

In the LCD **300,** one pixel includes three first electrodes **21a, 21b,** and **21c,** and two TFTs **14a** and **14b**. A drain of the TFT **14a** is connected to the first electrodes **21a** and **21c** via contact holes **18a** and **18c,** respectively. A drain of the TFT **14b** is connected to the first electrode **21b** via a contact hole **18b**. The pixel of the LCD **300** has the three first electrodes **21a, 21b,** and **21c,** but the first electrodes **21a** and **21c** are equivalent. Thus, the pixel can actually be represented by the equivalent circuit shown in FIG. **4,** and can be driven by the method described with reference to FIG. **5**. For example, a sub-pixel including the first electrodes **21a** and **21c** is a dark sub-pixel, and the sub-pixel including the first electrode **21b** is a light sub-pixel.

As shown in FIG. **19(b),** the continuous opening pattern **20** included in the first electrode **21b** has three V-shaped opening portions **23** each including both of a first linear component **22a** and a second linear component **22b**. The three V-shaped opening portions **23** are located with an axis parallel to the longer side of the pixel as an axis of symmetry. To each of the V-shaped opening portions **23,** a minute opening portion **25a** and a minute opening portion **25b** are coupled. The three V-shaped opening portions **23** are coupled by a linear opening portion **24** extending in a direction by which the interior angle of the V-shaped opening portion **23** is divided into two equal parts. The linear opening portion **24** is coupled to the center of the V-shaped opening portion **23**. The continuous opening pattern **20** included in the first electrode **21b** has a minute opening portion **25a** formed in the vicinity of the linear coupling opening portion **24** and a minute opening portion **25b** formed in the vicinity of an edge of the first electrode **21b**. In addition, in the lowest V-shaped opening portion **23,** a minute opening portion **25d** is formed on the inner side (on the inferior-angle side) of the V shape.

On the other hand, the continuous opening pattern **20** of the first electrode **21a** has the first linear component **22a,** but does not have a second linear component **22b**. The continuous opening pattern **20** of the first electrode **21c** has the second linear component **22b,** but does not have the first linear component **22a,** contrary to the continuous opening pattern **20** of the first electrode **21a**.

The continuous opening pattern **20** of the first electrode **21a** has four first linear components **22a,** which are coupled by means of a linear coupling opening portion **24a** extending in a direction different from the first linear components **22a** by about 90°. The continuous opening pattern **20** of the first electrode **21c** has four second linear components **22b,** which are coupled by means of a linear coupling opening portion **24b** extending in a direction different from the first linear component **22b** by about 90°. Both of the continuous opening patterns **20** have minute opening portions **25b** formed in the vicinity of the edges of the first electrodes **21a** and **21c,** respectively.

As shown in FIG. **19(c),** the dielectric projecting pattern **44** in a region corresponding to the first electrode **21b** has four third linear components **44a** and four fourth linear components **44b.** Among them, three pairs are directly coupled, thereby forming three V-shaped dielectric protrusions **45.** The four third linear components **44a** and the four fourth linear components **44b** are arranged in parallel with the three first linear components **22a** and the three second linear components **22b** in an alternating manner. Between them, four kinds of liquid crystal domains (see FIG. **2(a)**) are formed.

The dielectric projecting pattern **44** in a region corresponding to the first electrode **21a** has five third linear components **44a,** and the dielectric projecting pattern **44** in a region corresponding to the first electrode **21c** has five fourth linear components **44b.** The five third linear components **44a** and the five fourth linear components **44b** are arranged in parallel with the fourth first linear components **22a** and the four second linear components **22b** in an alternating manner. Between them, four kinds of liquid crystal domains (see FIG. **2(a)**) are formed.

Next, with reference to FIG. **20,** the pixel configuration of an LCD **310** in still another embodiment of the present invention will be described. FIG. **20(a)** is a plan view showing the configuration of two pixels in the LCD **310,** and is a plan view showing a continuous opening pattern **20** and an opening pattern **42.** FIG. **20(b)** is a plan view showing a dielectric projecting pattern **44** formed on a second substrate **310B.**

The LCD **310** has an opening pattern **42** instead of the dielectric projecting pattern **44** formed on the second substrate in the LCD **300.** The opening pattern **42** has a third linear component **42a,** a fourth linear component **42b,** and a V-shaped opening portion **43** formed by directly coupling them.

The opening pattern **42** formed in a second electrode **41** of the second substrate **310B** in the LCD **310** has a linear opening portion **47** extending toward the superior angle side from the pointed portion of the V shape of the lowest V-shaped opening portion **43.** The linear opening portion **47** acts so as to stabilize the orientation of liquid crystal molecules on the inside of the V shape of the V-shaped opening portion **23** instead of the minute opening portion **25d** formed on the inner side (on the inferior angle side) of the V shape of the lowest V-shaped opening portion **23** in the LCD **300.** The continuous opening pattern **20** included in the first substrate of the LCD **310** is the same excluding the configuration that the minute opening portion **25d** formed on the inside (on the inferior angle side) of the V shape of the lowest V-shaped opening portion **23** of the continuous opening pattern **20** in the LCD **300** is not included.

With reference to FIG. **21,** the pixel configuration of an LCD **320** in still another embodiment of the present invention will be described. FIG. **21** is a plan view showing a dielectric projecting pattern **40** in the LCD **320.** The dielectric projecting pattern **44** has the same pattern as the opening pattern **42** formed in the second electrode **41** shown in FIG. **20.** As described above, the dielectric projecting pattern as the second domain regulating structure formed in the second substrate and the opening pattern are equivalent, so that either of them can be adopted.

With reference to FIG. **22,** the pixel configuration of an LCD **330** in still another embodiment of the present invention will be described. FIG. **22(a)** is a plan view showing a continuous opening pattern **20** and a dielectric projecting pattern **44.** FIG. **22(b)** is a plan view showing a continuous opening pattern **20** formed in a first substrate **330A.**

The continuous opening pattern **20** in the LCD **330** corresponds to the continuous opening pattern **20** in the LCD **300** shown in FIG. **19** in which the minute opening portions **25a** and **25d** are omitted. The dielectric projecting pattern **44** of the LCD **330** has a linear dielectric protrusion **46** extending toward the superior angle side from the pointed portion of the V shape of the lowest V-shaped dielectric protrusion **45,** in addition to the dielectric projecting pattern **44** of the LCD **300.**

With reference to FIG. **23,** the pixel configuration of an LCD **340** in still another embodiment of the present invention will be described. FIG. **23** is a plan view showing a continuous opening pattern **20** and a dielectric projecting pattern **44** in the LCD **340.** The continuous opening pattern **20** included in the LCD **340** is the same as the continuous opening pattern **20** in the LCD **330** shown in FIG. **22(b).** The dielectric projecting pattern **44** included in the LCD **340** is different from the dielectric projecting pattern **44** in the LCD **330** in that the dielectric projecting pattern **44** included in the LCD **340** has linear dielectric protrusions **46** extending on the superior angle side from the pointed portions of the V shapes of all of the V-shaped dielectric protrusions **45.**

With reference to FIG. **24,** the pixel configuration of an LCD **350** in still another embodiment of the present invention will be described. FIG. **24** is a plan view showing a continuous opening pattern **20** and a dielectric projecting pattern **44** in the LCD **350.** The continuous opening pattern **20** included in the LCD **350** is the same as the continuous opening pattern **20** in the LCD **330** shown in FIG. **22(b).** The dielectric projecting pattern **44** included in the LCD **350** is the same as the dielectric projecting pattern in the LCD **300B** shown in FIG. **19(c).** As described above, the minute opening portions **25a, 25c,** and **25d** and the linear dielectric protrusion **46** for stabilizing the orientation of liquid crystal molecules in the vicinity of the V-shaped opening portion **23** and the V-shaped dielectric protrusion **45** may be omitted.

With reference to FIG. **25,** the pixel configuration of an LCD **360** in still another embodiment of the present invention will be described. FIG. **25(a)** is a plan view showing a continuous opening pattern **20** and a dielectric projecting pattern **44.** FIG. **25(b)** is a plan view showing the continuous opening pattern **20.**

If the linear dielectric protrusions **46** extending toward the superior angle side from the pointed portions of V shapes of all of the V-shaped dielectric protrusions **45** are provided as in the dielectric projecting pattern included in the LCD **340** shown in FIG. **23,** the upper two linear dielectric protrusions **46** overlap the linear coupling opening portion **24.** The orientation of liquid crystal molecules by the linear dielectric protrusions **46** is not matched with the orientation of liquid crystal molecules by the linear coupling opening portion **24,** so that there is a possibility that the orientation of liquid crystal molecules in this region may be largely disturbed.

The LCD **360** shown in FIG. **25** has the dielectric projecting pattern **44** which is the same as that in the LCD **340** shown in FIG. **23,** but the shape of the coupling opening portion **24c** of the continuous opening pattern **20** is different from that of the linear coupling opening portion **24** in the LCD **340.** Specifically, the coupling opening portion **24c** of the continuous opening pattern **20** in the LCD **360** is bent so as not to overlap the linear dielectric protrusion **46** formed in the corresponding position. By adopting such a configuration, the above-described disturbance in orientation of liquid crystal molecules can be suppressed.

With reference to FIG. **26,** the pixel configuration of an LCD **370** in still another embodiment of the present invention will be described. FIG. **26(a)** is a plan view showing a continuous opening pattern **20** and a dielectric projecting pattern **44.** FIG. **26(b)** is a plan view showing the continuous opening pattern **20.**

The dielectric projecting pattern **44** included in the LCD **370** is the same as the dielectric projecting pattern **44** in the LCD **350** shown in FIG. **24,** so that the linear dielectric protrusion **46** extending toward the superior angle side from the pointed portion of the V shape is not included.

The continuous opening pattern **20** included in the first electrodes **21a** and **21c** of the LCD **370** is the same as the continuous opening pattern **20** included in the LCD **350** shown in FIG. **24.**

The continuous opening pattern **20** included in the first electrode **21b** of the LCD **370** is different from the continuous opening pattern **20** included in the first electrode **21b** of the LCD **350** in that the V-shaped opening portion **23** is segmented in one position of the first linear component **22a.** In the first linear component **22a,** the segmented portion from the V-shaped opening portion **23** is shown as a linear component **22e.**

The continuous opening pattern **20** included in the first electrode **21b** of the LCD **370** does not have the linear coupling opening portion **24** which is coupled to the center of the V-shaped opening portion **23,** but has a linear coupling opening portion **24a** for coupling adjacent two first linear components **22a** and a linear coupling opening portion **24b** for coupling adjacent two second linear components **22b.** In addition, a minute opening portion **25c** is included on the superior angle side of the pointed portion of the V-shaped opening portion **23,** and a minute opening portion **25d** is included on the inside (on the inferior angle side) of the V-shaped opening portion **23.**

With reference to FIG. **27,** the pixel configuration of an LCD **380** in still another embodiment of the present invention will be described. FIG. **27(a)** is a plan view showing a continuous opening pattern **20** and a dielectric projecting pattern **44.** FIG. **27(b)** is a plan view showing the continuous opening pattern **20** included in a first substrate **380A.**

The dielectric projecting pattern **44** included in the LCD **380** is the same as the dielectric projecting pattern **44** in the LCD **350** shown in FIG. **24,** so as not to have the linear dielectric protrusion **46** extending toward the superior angle side from the pointed portion of the V shape.

The continuous opening patterns **20** included in the first electrodes **21a** and **21c** of the LCD **380** are different from the continuous opening pattern **20** included in the LCD **350** shown in FIG. **24** in that the minute opening portion **25b** is not included.

The continuous opening pattern **20** included in the first electrode **21b** of the LCD **380** is different from the continuous opening pattern **20** included in the first electrode **21b** of the LCD **350** shown in FIG. **24** in that the minute opening portion **25e** coupled to the linear coupling opening portion **24** is included, in that the minute opening portion **25c** is included on the superior angle side of the pointed portion of the V-shaped opening portion **23,** and in that the minute opening portion **25d** is included on the inferior angle side of the pointed portion of the V-shaped opening portion.

With reference to FIG. **28,** the pixel configuration of an LCD **390** in still another embodiment of the present invention will be described. FIG. **28(a)** is a plan view showing a continuous opening pattern **20** and a dielectric projecting pattern **44.** FIG. **28(b)** is a plan view showing a continuous opening pattern **20** included in a first substrate **390A.**

The continuous opening patterns **20** of the first electrodes **21a** and **21c** in the LCD **390** are the same as the continuous opening patterns **20** of the first electrodes **21a** and **21c** in the LCD **380** shown in FIG. **27,** but different from the continuous opening pattern **20** included in the first electrode **21b.**

The continuous opening pattern **20** of the first electrode **21b** in the LCD **390** has three first linear components **22a** and three second linear components **22b.** Among them, two pairs are mutually directly coupled, so as to form two V-shaped opening portions **23.** The pixel has a rectangular shape having a longer side in the column direction. The two V-shaped opening portions **23** are located with an axis parallel to the shorter side as an axis of symmetry. The second linear component **22b** of one of the V-shaped opening portions **23** is segmented into two portions.

The continuous opening pattern **20** of the first electrode **21b** in the LCD **390** does not have the linear coupling opening portion **24** coupled to the center of the V-shaped opening portion **23,** but has a linear coupling opening portion **24a** for coupling adjacent two first linear components **22a** and a linear coupling opening portion **24b** for coupling adjacent two second linear component **22b.** In addition, a minute opening portion **25e** is included on the superior angle side of the pointed portion of the V-shaped opening portion **23,** and a minute opening portion **25d** is included on the inside (on the inferior angle side) of the V-shaped opening portion **23.**

As described above, in the MVA LCD in respective embodiments of the present invention, since the first electrodes **21, 21a, 21b,** and **21c** have continuous opening portions (continuous opening patterns **20**), respectively, the MVA LCD has a characteristic that it is possible to obtain a larger number of separated portions than the prior art in a smaller number of cutting positions than the prior art. As understood from the above-described exemplary LCDs in various embodiments, various combinations can be realized, and the combinations are not limited to those exemplarily and specifically described.

As exemplarily described in the embodiments, in order to suppress the disturbance in orientation of liquid crystal molecules in the vicinity of the V-shaped opening portion **23** or the V-shaped dielectric protrusion **45** (the V-shaped opening portion **43**), the linear dielectric protrusion **46** (the linear opening portion **47**) may be provided, or the minute opening portions **25a, 25c, 25d,** or **25e** may be provided. It is noted that the minute opening portion **25a** or the like has a 2-dimensional shape, so that it is possible to attain an advantage that it is hardly affected by an error of alignment as compared with the case where the linear dielectric protrusion **46** (the linear opening portion **47**) is provided. The same is true for the minute opening portion **25d** provided for the edge of the second electrode **41,** and it is possible to attain an advantage that it is hardly affected by an error of alignment as compared with the case where a linear protrusion parallel to the edge as described in Patent Document 1.

## INDUSTRIAL APPLICABILITY

The present invention is applied to an MVA liquid crystal display device.

## REFERENCE SIGNS LIST

| | |
|---|---|
| 12 | Gate bus line |
| 13 | Source bus line |
| 14 | TFT |
| 15 | CS bus line |
| 16 | Drain lead-out wiring |
| 17 | Contact hole |
| 18 | CS counter electrode |
| 20 | Continuous opening pattern |
| 21 | First electrode (Pixel electrode) |
| 22 | Opening portion |
| 22a | First linear component |
| 22b | Second linear component |
| 23 | V-shaped opening portion |
| 24 | Linear coupling opening portion |
| 41 | Second electrode (Counter electrode) |
| 42 | Opening pattern in second electrode |
| 43 | V-shaped opening portion |
| 44 | Dielectric projecting portion |
| 44a | Third linear component |
| 44b | Fourth linear component |
| 45 | V-shaped dielectric protrusion |

## Claims

1.  An MVA liquid crystal display device comprising: a first substrate; a second substrate; a vertical-alignment type liquid crystal layer disposed between the first substrate and the second substrate; a first domain regulating structure formed in the first substrate; and a second domain regulating structure formed in the second substrate,
the first domain regulating structure having a first linear component extending in a first direction and a second liner component extending in a second direction different from the first direction by about 90°, the second domain regulating structure having a third linear component extending in the first direction and a fourth linear component extending in the second direction,
the number of at least one of the first and second linear components or the third and fourth linear components being plural, when viewed from a normal direction to the first substrate, the first linear component and the third linear component being alternately arranged, the second linear component and the fourth linear component being alternately arranged, and when a voltage is applied across the liquid crystal layer of an arbitrary pixel, four domains of which tilting directions of liquid crystal molecules are mutually different by about 90° being formed between the first linear component and the third linear component and between the second linear component and the fourth linear component, wherein
the arbitrary pixel includes at least one first electrode formed in the first substrate and a second electrode formed in the second substrate, each of the at least one first electrode has a continuous opening pattern, and the first and second linear components of the first domain regulating structure are included in any of the continuous opening patterns included respectively in the at least one first electrode.

2.  The liquid crystal display device of claim 1, wherein the at least one first electrode includes a first type of first electrode in which the continuous opening pattern includes a V-shaped opening portion including both of the first and the second linear components.

3.  The liquid crystal display device of claim 2, wherein the continuous opening pattern of the first type of first electrode includes a plurality of both of the first and the second linear components, and includes a plurality of V-shaped opening portions.

4. The liquid crystal display device of claim 3, wherein the continuous opening pattern of the first type of first electrode further includes a linear opening portion extending in a direction by which an interior angle of the V-shaped opening portion is divided into two equal parts.

5. The liquid crystal display device of claim 4, wherein the first type of first electrode has a longer side and a shorter side, and the linear opening portion is parallel to the longer side.

6. The liquid crystal display device of claim 5, wherein the linear opening portion is coupled to the center of the plurality of V-shaped opening portions.

7. The liquid crystal display device of any one of claims 2 to 6, wherein the at least one first electrode further includes a plurality of minute opening portions parallel to a direction substantially orthogonal to the first linear component or the second linear component.

8. The liquid crystal display device of claim 7, wherein the plurality of minute opening portions are formed in the vicinity of the center of the V-shaped opening portion.

9. The liquid crystal display device of claim 7 or 8, wherein the plurality of minute opening portions are formed in the vicinity of an edge of the at least one first electrode.

10. The liquid crystal display device of any one of claims 7 to 9, wherein the plurality of minute opening portions are included in the continuous opening pattern.

11. The liquid crystal display device of any one of claims 1 to 10, wherein the at least one first electrode includes a plurality of first electrodes, and the plurality of first electrodes include a second type of first electrode in which the continuous opening pattern includes only either one of the first linear component or the second linear component, and a third type of first electrode in which the continuous opening pattern includes only the other one of the first linear component or the second linear component.

12. The liquid crystal display device of claim 11, wherein the continuous opening pattern of the second type of first electrode includes a plurality of the first linear components or the second linear components, and the plurality of first linear components or the plurality of second linear components are coupled by a linear coupling opening portion extending in a direction different from the first direction by about 90° or by a linear coupling opening portion extending in a direction different from the second direction by about 90°.

13. The liquid crystal display device of any one of claims 1 to 12, wherein the plurality of first electrodes includes two first electrodes arranged symmetrically with respect to a gate bus line or a CS bus line, and the continuous opening patterns of the two first electrodes have a line symmetric relationship with the gate bus line or the CS bus line as an axis of symmetry.

14. The liquid crystal display device of claim 13, wherein both of the two first electrodes are first type of first electrodes in each of which the continuous opening pattern includes both of the first and the second linear components, and the V-shaped opening portion is disposed in such a manner that the upper side of the V shape is directed to the gate bus line or the CS bus line.

15. The liquid crystal display device of any one of claims 1 to 14, wherein the continuous opening pattern included in each of the at least one first electrode does not cross the edge of the at least one first electrode.

16. The liquid crystal display device of any one of claims 1 to 15, wherein when viewed from a normal direction to the first substrate, a respective edge of the at least one first electrode partially overlaps a source bus line.

17. The liquid crystal display device of any one of claims 1 to 16, wherein the second domain regulating structure is included in the opening pattern formed in the second electrode or the dielectric projecting pattern formed on the side of the liquid crystal layer of the second electrode.

18. The liquid crystal display device of claim 17, wherein in the at least one first electrode, the continuous opening pattern includes a V-shaped opening portion including both of the first and the second linear components, and when viewed from a normal direction to the first substrate, the opening pattern or the dielectric projecting pattern of the second electrode further includes a linear opening portion or a linear dielectric protrusion extending in a direction for dividing an interior angle of the V-shaped opening portion into two equal parts.

19. The liquid crystal display device of claim 18, wherein when viewed from the normal direction to the first substrate, the at least one first electrode is in parallel with the linear opening portion or the linear dielectric protrusion of the second electrode extending in the direction for dividing the interior angle of the V-shaped opening portion into two equal parts, and does not have an opening portion which overlaps the linear opening portion or the linear dielectric protrusion of the second electrode.

*FIG.1*

(a)

(b)

*FIG.2*

(a)

(b)

*FIG.3*

(a)

15

13

14

12

Cs

21

P

(b)

13

CS BUS LINE 15a

Cs1

21a

SP1

14a

12

14b

21b

SP2

Cs2

CS BUS LINE 15b

P

*FIG.4*

*FIG.5*

FIG.6

(a)

(b)

(c)

EP 2 416 213 A1

## FIG.7

(a)

(b)

FIG.8

FIG.9

(a)

(b)

(c)

EP 2 416 213 A1

FIG.10

(a)       130

13

21a

15

17a
17b } 17

18

16

12

14

21b

(b)       130A

21a
25b
22a(22)
24a
25a
} 20

21b
22b(22)
24b
25a
25b
} 20

(c)       130B

41

44a
} 44
44b

EP 2 416 213 A1

*FIG.11*

# FIG.12

EP 2 416 213 A1

FIG.13

(a)

(b)

(c)

*FIG.14*

*FIG.15*

## FIG.16

(a)

(b)

(c)

(d)

FIG.17

(a)

(b)

(c)

EP 2 416 213 A1

*FIG.18*

EP 2 416 213 A1

*FIG.19*

*FIG.20*

(a)

310

21c
42a
21b
21a

(b)

310B

41
42a
42a
42b
43 { 42b
      42a
47

EP 2 416 213 A1

FIG.21

FIG.22

(a) 330

(b) 330A

EP 2 416 213 A1

*FIG.23*

340

44a

44a

44b

46

45

44b

FIG.24

FIG.25

(a) 360

(b) 360A

FIG.26

(a)                                          (b)

370                                          370A

*FIG.27*

(a)

(b)

FIG.28

(a) 390

44a
42a
42b } 44
43
44b
49

(b) 390A

21c
25b
22a
24a
25b
24a
22a
25d
22b
24b
25b
22b
22d
21a
21b
25e

EP 2 416 213 A1

<div align="center">**INTERNATIONAL SEARCH REPORT**</div>

| | International application No. |
|---|---|
| | PCT/JP2010/002404 |

A.   CLASSIFICATION OF SUBJECT MATTER
*G02F1/1343*(2006.01)i, *G02F1/1337*(2006.01)i, *G02F1/1368*(2006.01)i

According to International Patent Classification (IPC) or to both national classification and IPC

B.   FIELDS SEARCHED

Minimum documentation searched (classification system followed by classification symbols)
G02F1/1343, G02F1/1337, G02F1/1368

Documentation searched other than minimum documentation to the extent that such documents are included in the fields searched
Jitsuyo Shinan Koho       1922-1996   Jitsuyo Shinan Toroku Koho   1996-2010
Kokai Jitsuyo Shinan Koho   1971-2010   Toroku Jitsuyo Shinan Koho   1994-2010

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| Y | JP 2006-259719 A  (Samsung Electronics Co., Ltd.), 28 September 2006 (28.09.2006), paragraphs [0026] to [0031]; fig. 1 & US 2006/0187368 A1    & KR 10-2006-0094449 A & CN 1825172 A | 1-10,13-19 |
| Y | JP 2002-365636 A  (Sharp Corp.), 18 December 2002 (18.12.2002), paragraphs [0090] to [0100], [0167]; fig. 72, 138 & US 2004/0119924 A1    & EP 1411385 A2 & TW 586041 B            & KR 10-0407366 B1 & CN 1550852 A | 1-10,13-19 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 30 April, 2010 (30.04.10) | 18 May, 2010 (18.05.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
|---|
| PCT/JP2010/002404 |

C (Continuation).   DOCUMENTS CONSIDERED TO BE RELEVANT

| Category* | Citation of document, with indication, where appropriate, of the relevant passages | Relevant to claim No. |
|---|---|---|
| Y | WO 2008/078441 A1  (Sharp Corp.),<br>03 July 2008 (03.07.2008),<br>paragraphs [0038] to [0063]; fig. 1 to 14<br>& EP 2098907 A1          & CN 101523279 A | 7-10,13-19 |
| A | WO 2007/034596 A1  (Sharp Corp.),<br>29 March 2007 (29.03.2007),<br>paragraphs [0156] to [0168]; fig. 12, 13<br>& JP 4405557 B          & US 2009/0251615 A<br>& CN 101243481 A | 1-19 |
| A | JP 2006-106101 A  (Sanyo Electric Co., Ltd.),<br>20 April 2006 (20.04.2006),<br>paragraphs [0040] to [0052]; fig. 1 to 3<br>(Family: none) | 1-19 |
| A | JP 2004-93654 A  (Sanyo Electric Co., Ltd.),<br>25 March 2004 (25.03.2004),<br>paragraphs [0016] to [0030]; fig. 1 to 5<br>(Family: none) | 1-19 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11242225 A
- US 6724452 B
- JP 2000155317 A
- US 6879364 B
- JP 2004062146 A
- US 6958791 B
- JP 2002055361 A
- JP 7034596 A
- JP 2008197583 A